# EUROPEAN PATENT APPLICATION

(11) **EP 0 738 906 A2**
(43) Date of publication of application: **23.10.1996**
(21) Application number: 96302715.6
(22) Date of filing: 18.04.1996
(51) Int. Cl.: G02B 5/30, G02F 1/1335, C09K 19/00

(54) **Method for preparing optical film**

(30) Priority: 20.04.1995 JP 130932/95
(71) Applicant: NIPPON OIL CO. LTD., Minato-ku Tokyo (JP)
(72) Inventor: Iida, Shigeki, Kawasaki-shi, Kanagawa-ken (JP); Kobori, Yoshihiro, Kamakura-shi, Kanagawa-ken (JP)
(74) Representative: Smaggasgale, Gillian Helen

(57) **Abstract**

It is intended to provide a method for making an optical film suitable for use as an optical element having a plurality of optical characteristics in a single plane. In a method for making an optical film, involving forming on an orienting substrate a film of a liquid crystalline polymer which assumes a glassy state at a temperture below the liquid crystal transition point thereof, allowing the liquid crystalline polymer to be oriented in the state of liquid crystal, and thereafter fixing the orientation form obtained, the said liquid crystalline polymer has a property of undergoing a change in its orientation form upon exposure to light, and during the period after formation of a film of the liquid crystalline polymer on the orienting substrate until fixing of the orientation form, light is radiated to at least a portion of the liquid crystalline polymer film formed on the orienting substrate to control the orientation form.

## Description

### [Background of the Invention]

The present invention relates to a method for preparing an optical film for application to any of optical elements useful in the fields, for example, displays, optoelectronics and optics such as, for example, a compensator for a liquid crystal display, a field angle improving plate for a liquid crystal display, an optical phase plate, an optical rotator, aλ/4 plate, and aλ/2 plate.

Liquid crystalline polymers have an optical anisotropy and can assume various molecular orientation forms as compared with other conventional polymers. It is therefore known that polymer films obtained by fixing such orientation forms are applicable to various optical elements. Particularly, an optical element using a liquid crystalline polymer having a twisted structure can be given various characteristics which cannot be attained with the use of conventional optical elements.

As such optical elements using a liquid crystalline polymer having a twisted structure as mentioned above there have been proposed, for example, a compensator for a liquid crystal display (JP3-87720A) and an optically active element (JP4-22917A).

These optical elements were epoch-making optical elements, having such a high performance as has been unattainable with the use of conventional optical elements and, when formed on a polymer film, also exhibiting characteristics peculiar to the polymer film such as being light, thin and highly flexible.

However, the polymer film used in the above optical elements exhibits the same optical performance throughout the whole intra-plate area of each such optical element, and the production of a liquid crystalline polymer type optical element having plural optical characteristics in a single plane requires a complicated process and an advanced printing technique, including the formation of a protective layer and the use of a resist. Besides, in a fine area it is difficult to control the optical performance. Thus, many problems remain to be solved.

It is an object of the present invention to solve the above-mentioned problems and provide a method for making an optical film useful in its application to an optical element having plural optical characteristics in a single plane.

### [Summary of the Invention]

The present invention, in the first aspect thereof, resides in a method for preparing an optical film comprising forming on an orienting substrate a film of a liquid crystalline polymer which assumes a glassy state at a temperature below the liquid crystal transition point thereof, allowing the liquid crystalline polymer film to be oriented in the state of liquid crystal, and thereafter fixing the oriented state, characterized in that, during the period after formation of the liquid crystalline polymer film until fixing of the oriented state, at least a portion of the liquid crystalline polymer film is subjected to the radiation of light to control the oriented form

The present invention, in the second aspect thereof, resides in a method for preparing the optical film wherein at least a portion of the liquid crystalline polymer film formed on the substrate is subjected to the radiation of light, controlling the form of orientation at the irradiated portion, simultaneously with or after the irradiation, into a form different from that before the irradiation in the state of liquid crystal, and fixing the oriented form.

The present invention, in the third aspect thereof, resides in a method for preparing the optical film wherein the liquid crystalline polymer is a liquid crystalline polymer having a property of forming an oriented form which has a twisted structure in the state of liquid crystal.

The present invention, in the fourth aspect thereof, resides in a method for preparing the optical film wherein the control of orientation form is made by changing the twist angle of the liquid crystalline polymer under the radiation of light thereto.

### [Detailed Description of preferred embodiments of the Present Invention)

Preferred embodiments of the present invention will be described in more detail hereinunder.

The liquid crystalline polymer used in the present invention has a property of undergoing a change in its orientation form upon radiation of light thereto, more particularly, a property of its orientation form being changed by the radiation of light thereto into a form different from that before the irradiation, either simultaneously with or after the irradiation. As examples of such change in the orientation form are included changes in the order parameter, twist angle, and tilt angle of the liquid crystalline polymer. Such changes lead to changes in optical characteristics. The liquid crystalline polymer used in the present invention preferably possesses a property of undergoing a change in its twist angle.

Further, in order that the orientation form in the state of liquid crystalis fixed in a stable manner, it is important for the liquid crystalline polymer to assume a glassy state at a temperature below its liquid crystal transition point and not to have a crystal phase in a lower temperature region than the liquid crystal phase when viewed in terms of the phase series of liquid crystal. If such crystal phase is present, an inevitable passage therethrough at the time of cooling for fixing the orientation results in destruction of the orientation formed in the state of liquid crystal. For this reason it is desirable for the liquid crystalline polymer used in the invention to exhibit a satisfactory orientability based on an interfacial effect and have glass phase in a lower temperature region than the liquid crystal phase.

The liquid crystalline polymer used in the invention and having the aforesaid properties indicates a thermotropic or lyotropic liquid crystalline high-molecular compound or composition, examples of which include:
① a composition comprising as a base polymer at least one liquid crystalline polymer or a liquid crystalline polymer composition containing at least one liquid crystalline polymer, and at least one photoreactive compound incorporated in the base polymer, the photoreactive compound having a property capable of changing, by the radiation of light, an oriented form formed by the base polymer in the state of liquid crystal into a form different from that before the irradiation, simultaneously with or after the irradiation;
② a liquid crystalline polymer having photoreactivity one or plural of whose photoreactive sites have been introduced into the side or main chain of a base polymer, the said liquid crystalline polymer having a property capable of changing, by the radiation of light, an oriented form into a form different from that before the irradiation, simultaneously with or after the irradiation,
or a composition containing at least one such liquid crystalline polymer having photoreactivity; and a mixture of the two.

No special limitation is placed on the kind of liquid crystal phase exhibited by the liquid crystalline polymer as the base polymer As examples of the liquid crystal phase are mentioned nematic phase, smectic phase, discotic phase, and chiral phase, provided that the liquid crystal phase which forms an orientation form has a twisted structure. From this standpoint, a liquid crystalline polymer having chiral phase, especially chiral nematic phase, is preferred in the present invention.

Any liquid crystalline polymer as the base polymer is substantially employable provided that it assumes a glassy state at a temperature below the liquid crystal transition point thereof. Particularly preferred is one which forms nematic orientation or twisted nematic orientation in the state of liquid crystal. Also employable is one which orients not in parallel with the plane of an orienting substrate but at a certain tilt angle.

Examples of the liquid crystalline polymer as the base polymer include main chain type liquid crystalline polymers such as, for example, liquid crystalline polyesters, liquid crystalline polyamides, liquid crystalline polyesterimides, liquid crystalline polycarbonates, and mixtures thereof, as well as side chain type liquid crystalline polymers such as, for example, liquid crystalline polyacrylates, liquid crystalline polymethacrylates, liquid crystalline polymalonates, liquid crystalline polysiloxanes, and mixtures thereof. In view of their ease of synthesis orientability and glass transition point, main chain type liquid crystalline polymers, especially liquid crystalline polyesters, are preferred. Above all, liquid crystalline aromatic polyesters such as, for example, semi- or wholly aromatic polyesters, are preferred.

As the liquid crystalline aromatic polyesters just referred to above, polyesters containing an ortho-substituted aromatic unit as a constituent are preferred. Also employable are polyesters which contain, in place of such ortho-substituted aromatic unit, an aromatic unit having a bulky substituent group or an aromatic unit having fluorine or a fluorine-containing substituent group.

The "ortho-substituted aromatic unit" as referred to herein indicates a structural unit with main chain-constituting bonds ortho to each other.

Examples are the following units. 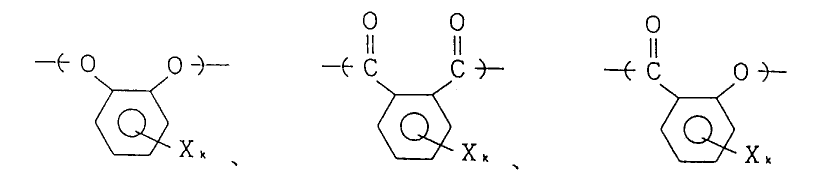 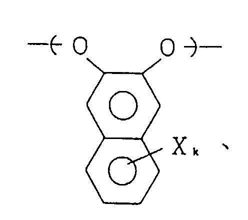 wherein X represents hydrogen, halogen, e.g. Cl or Br, an alkyl or alkoxy group having 1 to 4 carbon atoms, or phenyl, and k is 0 to 2.
The following are particularly preferred: 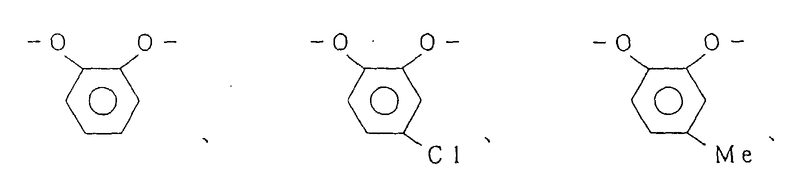 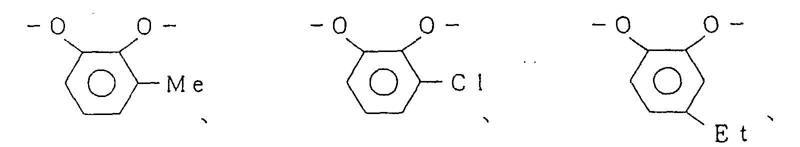 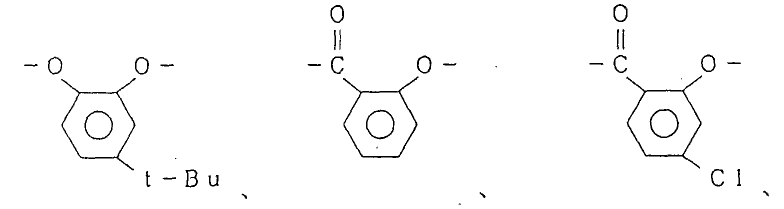 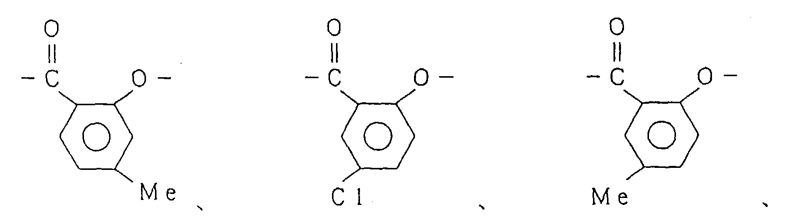 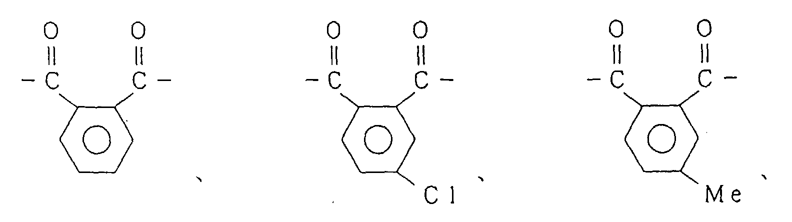
- Me :: methyl
- Et :: ethyl
- Bu :: butyl

Also, as examples of the polyesterpreferably used in the present invention there are mentioned those containing as repeating units:(a) a structural unit derived from a diol (hereinafter referred to as "diol component") and a structural unit derived from a dicarboxylic acid ("dicarboxylic acid component" hereinafter); (b) a structural unit derived from a hydroxycarboxylic acid ("hydroxycarboxylic acid component" hereinafter) containing both carboxyl and hydroxyl groups in one unit or both (a) and (b). Preferably, these polyesters further contain the foregoing ortho-substituted aromatic unit.

As examples of the diol component there are mentioned the following aromatic and aliphatic diols: 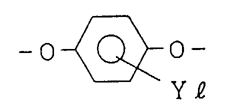 wherein Y represents hydrogen, halogen, e.g. Cl or Br, an alkyl or alkoxy group having 1 to 4 carbon atoms, or phenyl, and ℓ is 0 to 2.

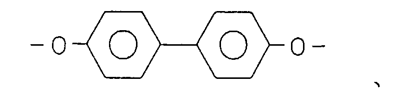

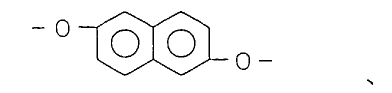

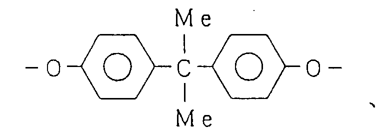

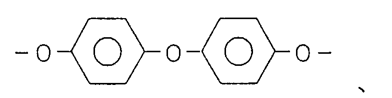

-O-(CH₂)ₙ-O-

(n is an integer of 2 to 12),

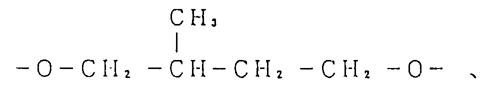

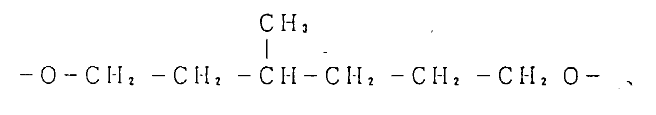

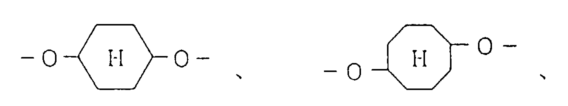

Particularly, the following are preferred:

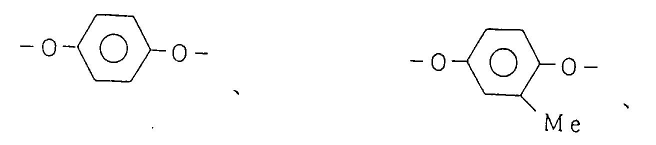

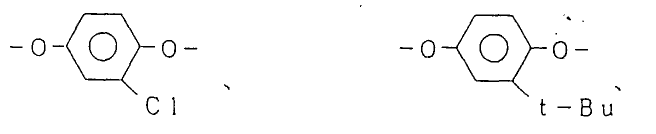

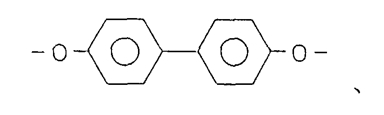

-O-CH₂ CH₂ -O- , -O(CH₂)₄O-,

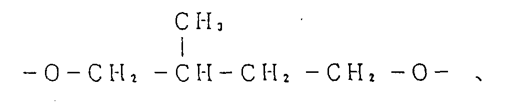

-O(CH₂)₄O- ,

As examples of the dicarboxylic acid component, the following may be mentioned: 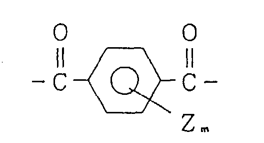 wherein Z represents hydrogen, halogen, e.g. Cl or Br, an alkyl or alkoxy group having 1 to 4 carbon atoms, or phenyl, and m is 0 to 2. 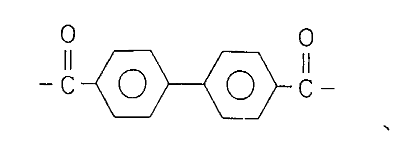 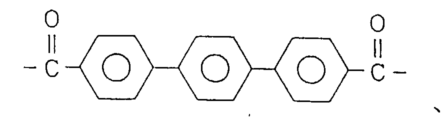 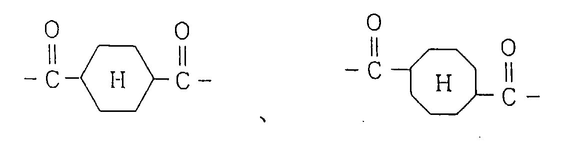 Particularly, the following are preferred:

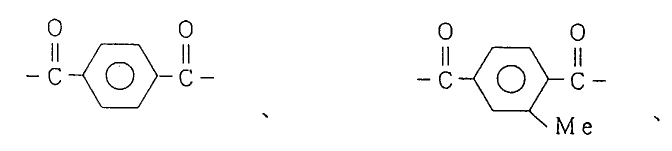

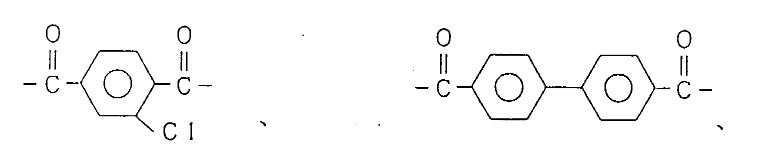

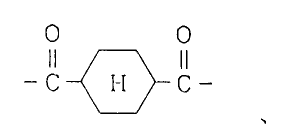

As examples of the hydroxycarboxylic acid component, the following units may be mentioned:

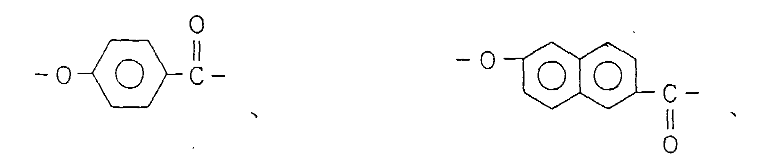

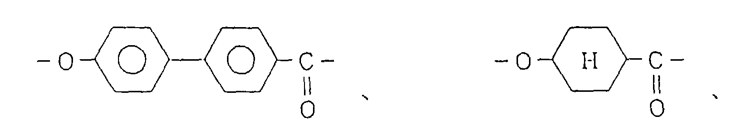

The dicarboxylic acid to diol mole ratio is preferably approximately 1:1 like that of polyesters commonly used (carboxyl to hydroxyl ratio in the case of using a hydroxycarboxylic acid). The proportion of ortho-substituted aromatic units in the polyester is preferably in the range of 5 to 40 mole%, more preferably 10 to 30 mole%. In the case where the said proportion is smaller than 5 mole%, a crystal phase tends to appear under the liquid crystal phase, so such proportion is not desirable. A proportion larger than 40 mole% is not desirable, either, because the polymer will no longer exhibit liquid crystallinity. The following are typical examples of polyesters which may be used in the present invention:

Polymers consisting essentially of the following structural units:

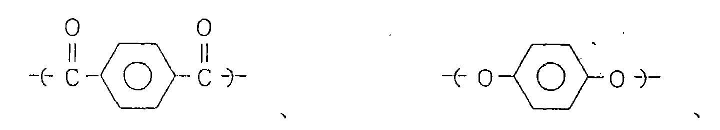

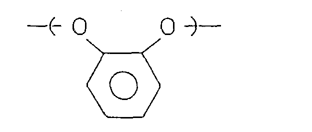

Polymers consisting essentially of the following structural units:

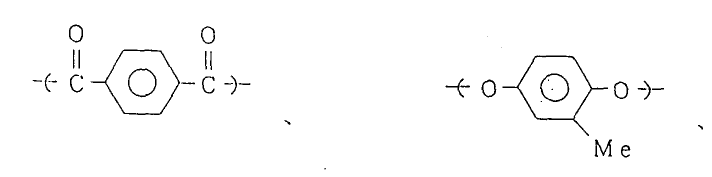

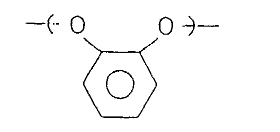

Polymers consisting essentially of the following structural units:

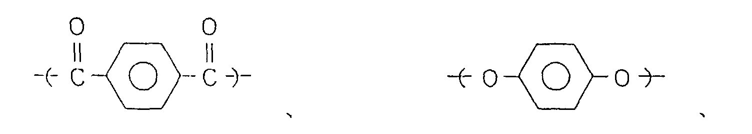

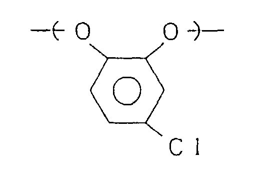

Polymers consisting essentially of the following structural units:

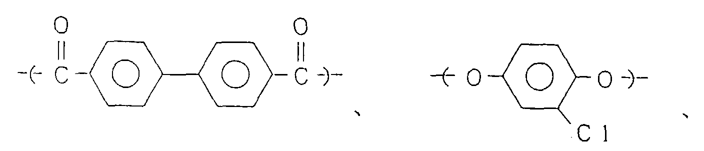

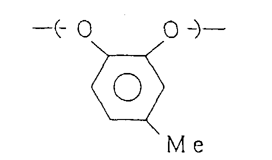

Polymers consisting essentially of the following structural units:

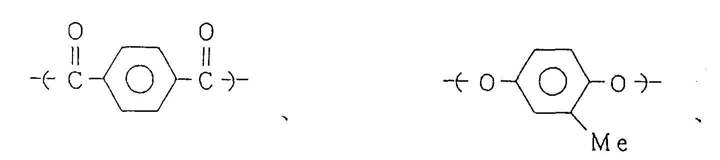

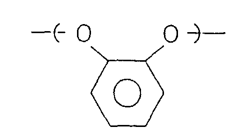

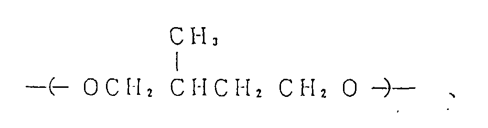

Polymers consisting essentially of the following structural units:

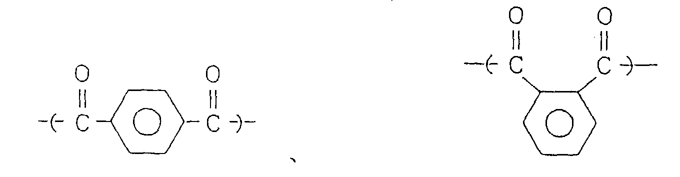

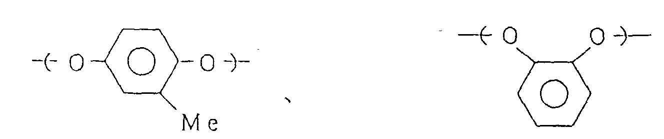

Polymers consisting essentially of the following structural units:

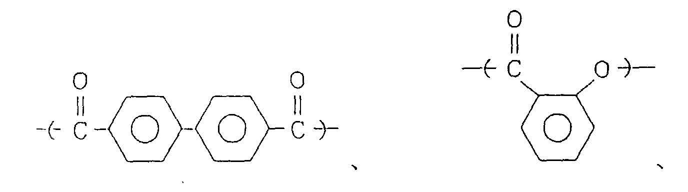

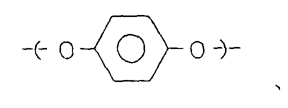

Polymers consisting essentially of the following structural units:

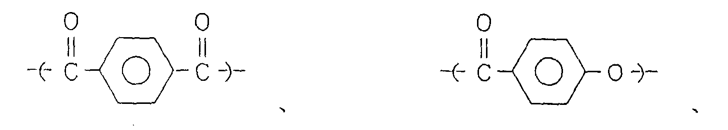

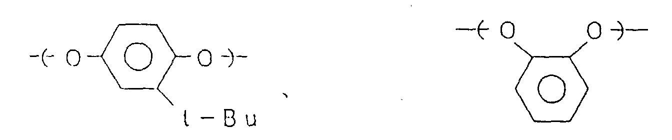

Also preferred are polymers which, in place of ortho-substituted aromatic units, contain as repeating units such bulky substituent-containing aromatic units or aromatic units containing fluorine or fluorine-containing substituents as shown below:

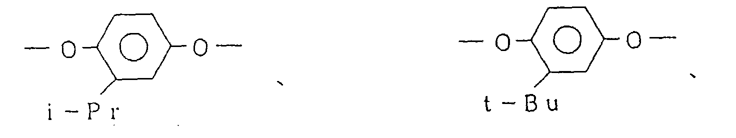

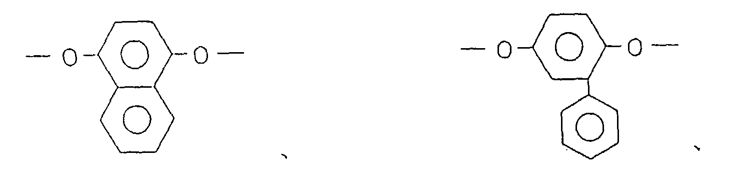

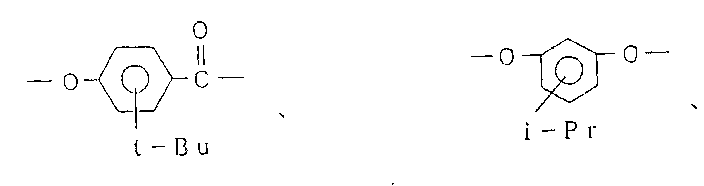

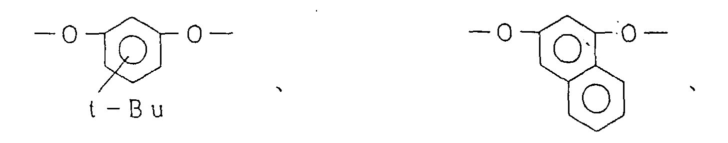

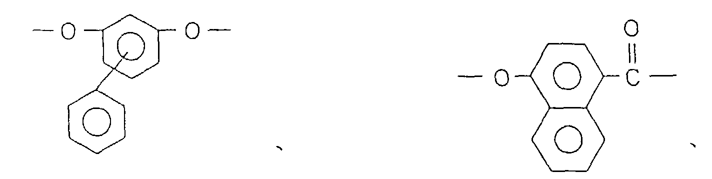

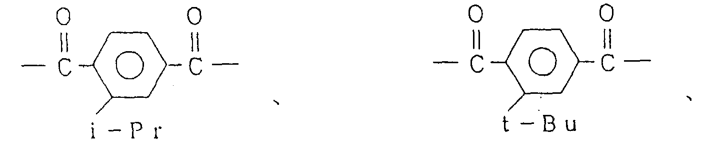

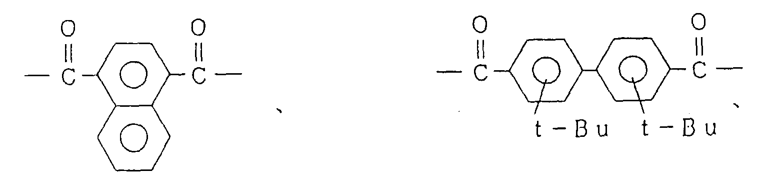

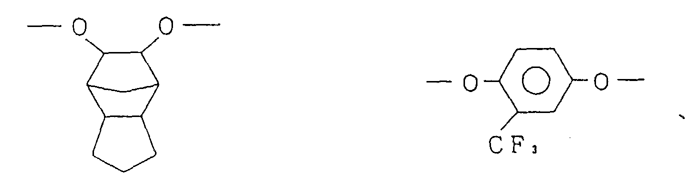

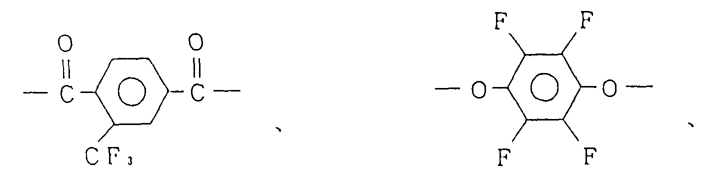

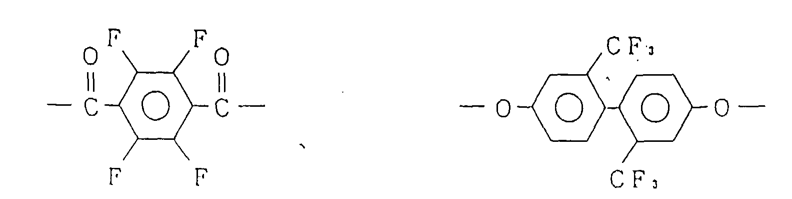

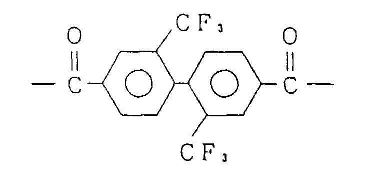

The polymers exemplified above range in molecular weight preferably from 0.05 to 3.0, more preferably 0.07 to 2.0, in terms of inherent viscosity as determined at 30°C in a solvent, e.g. a mixed phenol/tetrachloroethane [60/40 (weight ratio)] solvent. An inherent viscosity lower than 0.05 is not desirable because the strength of the resulting film of polymer liquid crystal will be low, while if the inherent viscosity is higher than 3.0, there will arise such problems as the deterioration of the degree of orientation and an increase of the time required for orientation because of too high viscosity at the liquid crystal state.

How to prepare the polymer used in the present invention is not specially limited. There may be adopted any of the polymerization processes known in this field, e.g. a melt polymerization process or an acid chloride process using an acid chloride of a corresponding dicarboxylic acid.

According to a melt polycondensation process, the polyester can be prepared by polymerizing a corresponding dicarboxylic acid and an acetylated compound of a corresponding diol at a high temperature and in a high vacuum. For accelerating the polymerization reaction there may be used a known metal salt such as sodium acetate. In the case of using a solution polymerization process, the polyester can be prepared easily by dissolving predetermined amounts of a dicarboxylic acid dichloride and a diol in a solvent and heating the resulting solution in the presence of an acid acceptor such as pyridine. The molecular weight thereof can be adjusted easily by controlling the polymerization time or the feed composition.

Further, in the present invention, in addition to the liquid crystalline polymers as the above mentioned base polymer, liquid crystalline polymers which are polymers having an optically active unit in the main chain or side chain of the above liquid crystalline polymer or optically active liquid crystalline polymer compositions comprising the above liquid crystalline polymer and one or more low- or high- molecular weight optically active compounds can be used as a base polymer.

The optically active liquid crystalline polymer as mentioned above is a liquid crystalline polymer having an optically active site as a structural unit in the polymer chain. The optically active liquid crystalline polymers used in the present invention are preferably those which can make uniform monodomain orientation by themselves and having glassy state thereby fixing the orientation form easily. Examples are optically active main chain type liquid crystalline polymers such as liquid crystalline polyesters, liquid crystalline polyamides, liquid crystalline polyesterimides, liquid crystalline polycarbonates and mixtures thereof, and optically active side chain type liquid crystalline polymers such as liquid crystalline polyacrylates, liquid crystalline polymethacrylates, liquid crystalline malonates, liquid crystalline polysiloxanes and mixtures thereof. Above all, from the standpoints of preparation, orientation, glass transition temperature or the like, optically active main chain type liquid crystalline polymers are preferred and especially optically active liquid crystalline aromatic polyesters are most preferred. Among them, those having ortho-substituted aromatic units as constituent or repeating units although those having no ortho-substituted aromatic unit can also be used so far as the above requirements are satisfied.

The optically active liquid crystalline polyesters can be prepared by introducing one or more optically active groups such as optically active diols, dicarboxylic acids, hydroxycarboxylic acids as exemplified below. In the formulae, the mark * means an optically active carbon. 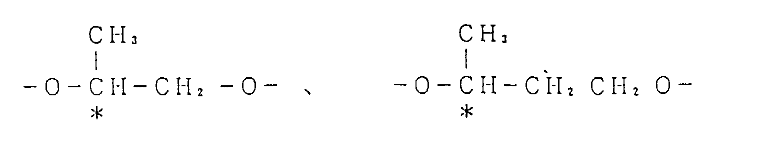 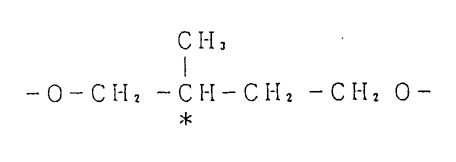 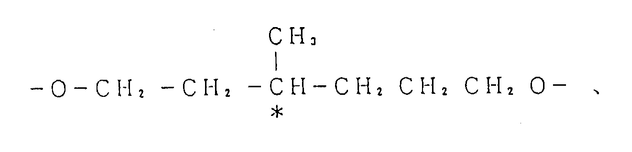 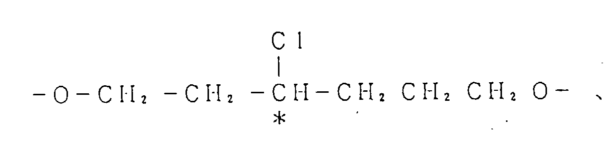 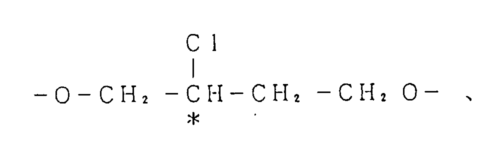 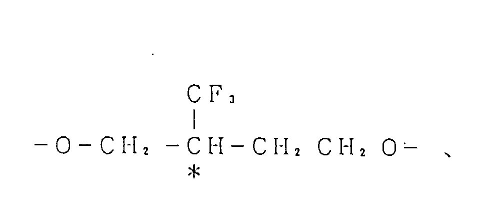 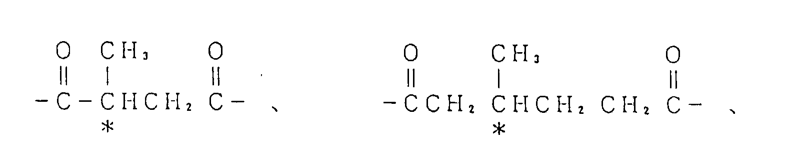 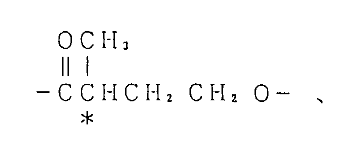 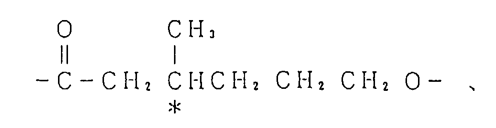 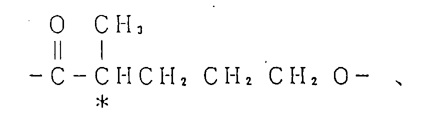 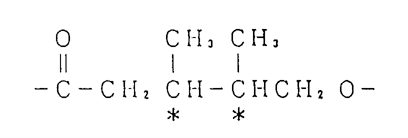 and the like.

Such optically active groups are usually present in an amount of 0.05-80 mol%, preferably 0.5-60 mol% in the optically active liquid crystalline polymer.

The optically active liquid crystalline polymer preferably has a molecular weight in the range of from 0.05 to 3.0, more preferably 0.07 to 2.0, in terms of inherent viscosity as determined at 30°C in a solvent, e.g. a mixed phenol/tetrachloroethane [60/40 (weight ratio)] solvent. An inherent viscosity lower than 0.05 is not desirable because the strength of the resulting film of polymer liquid crystal will be low, while if the inherent viscosity is higher than 3.0, there may arise such problems as the deterioration of the degree of orientation and an increase of the time required for orientation because of too high viscosity at the liquid crystal state.

How to prepare the polymers used in the present invention is not specially limited. Any of the polymerization processes known in this field may be employed, e.g. a melt polycondensation processes or an acid chloride processes are concrete examples.

Then, an explanation will now be made about optically active liquid crystalline polymer compositions. The optically active liquid crystalline polymer compositions can be prepared by mixing one or more optically active compounds with the above mentioned one or more liquid crystalline polymers.

As the optically active compound, any compound with an optically active site can be used regardless of its molecular weight. Examples of the low molecular compounds include the following compounds and derivatives of cholesterol.

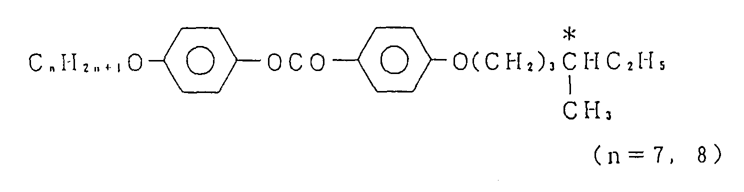

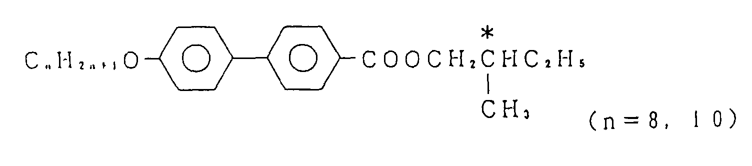

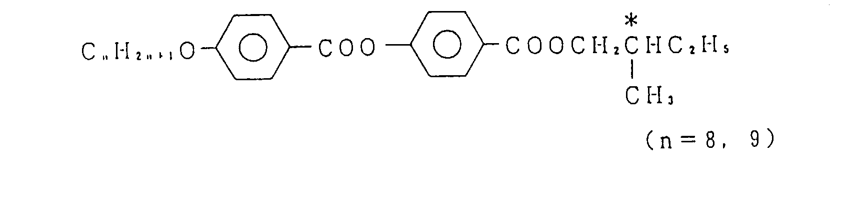

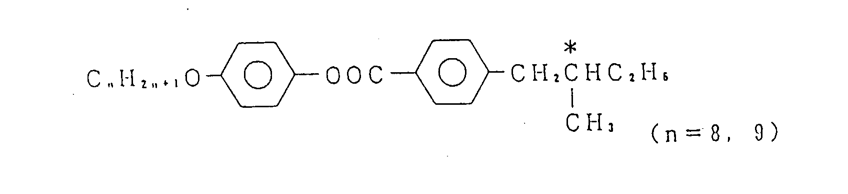

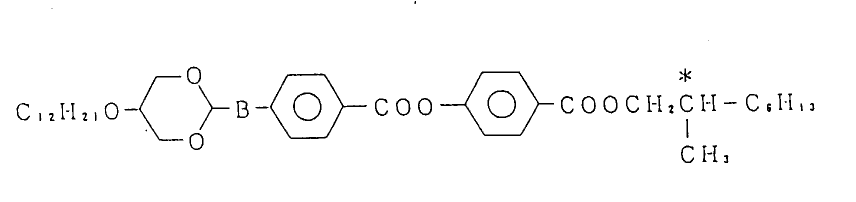

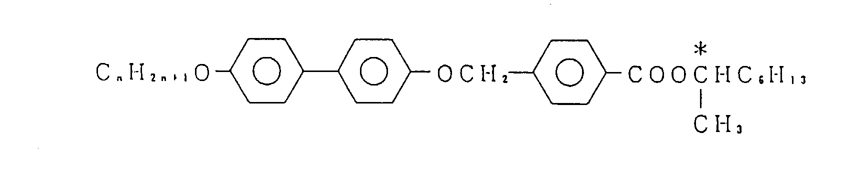

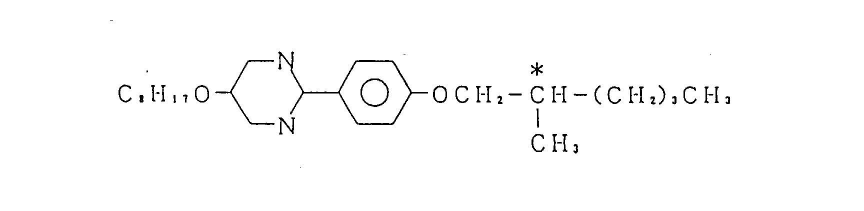

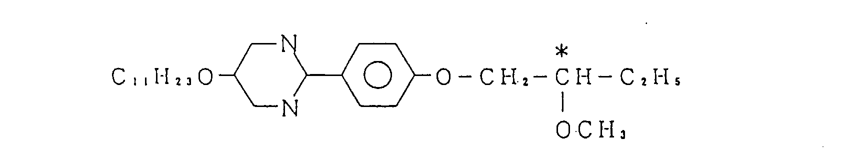

These compounds can be mixed alone or in combination.

Examples of the high molecular compounds are polymers with optically active groups such as polyacrylates, polymethacrylates, polymalonates, polysiloxanes, polyesters, polyamides, polyesteramides, polycarbonates, polypeptides, celluloses and mixtures thereof. Preferred compounds, polymers or mixtures are those exhibiting liquid crystallinity by themselves but those exhibiting no liquid crystallinity can be used in combination with the above mentioned base polymers so far as the compositions thus obtained exhibit uniform liquid crystal phase.

Among the above polymers having optically active groups, polyesters exhibiting liquid crystallinity are preferred, among which optically active liquid crystalline polyesters mainly consisting of aromatic compounds are most preferable.

Examples are polyesters constituted by the following structural units.

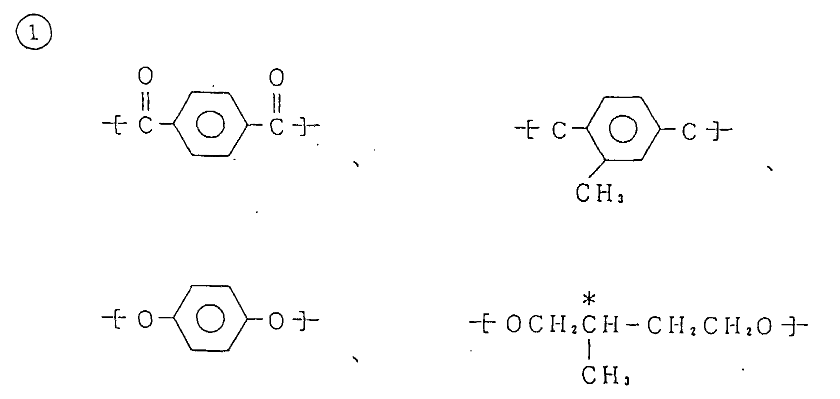

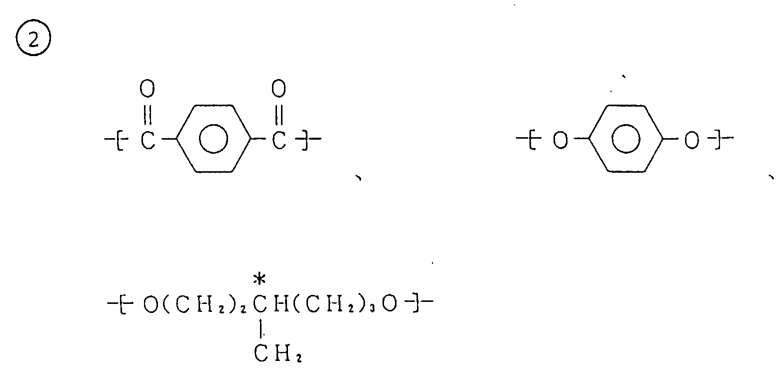

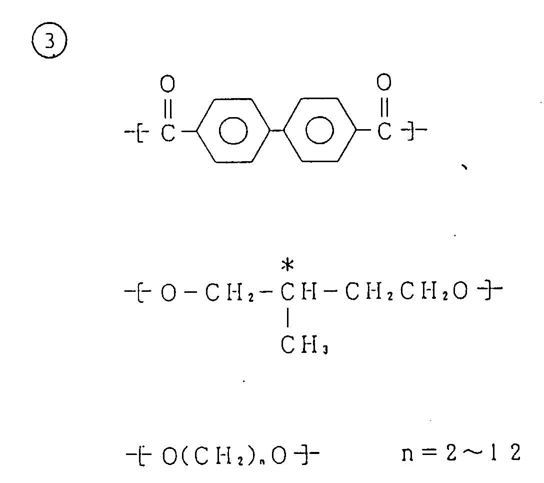

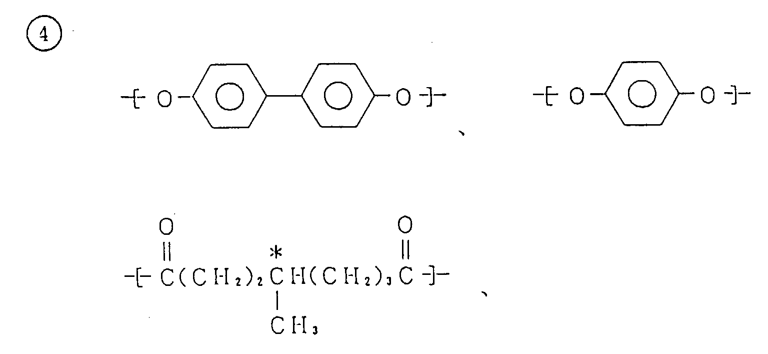

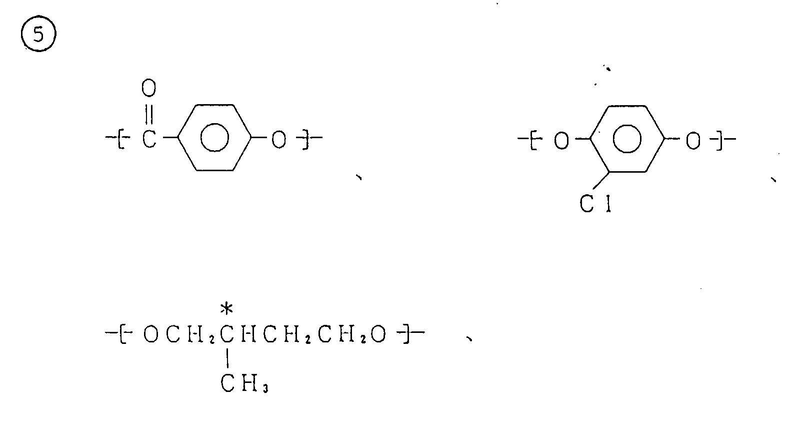

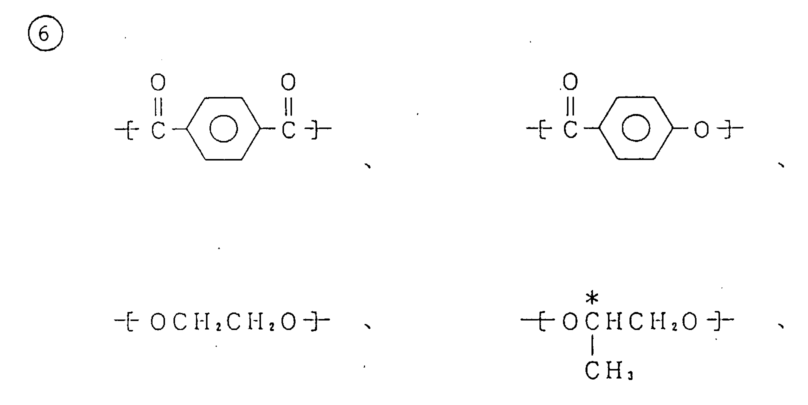

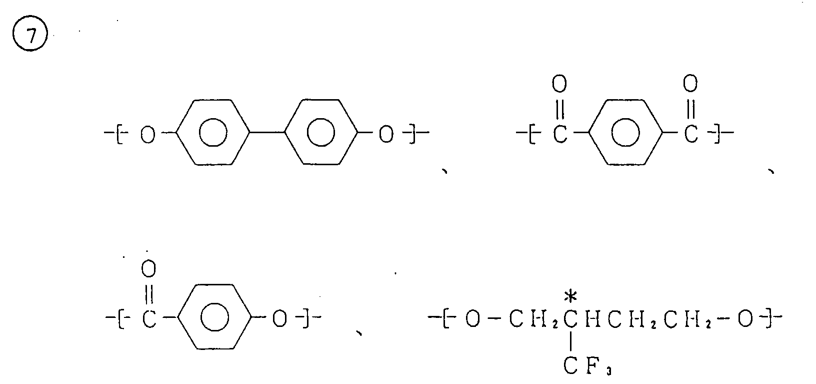

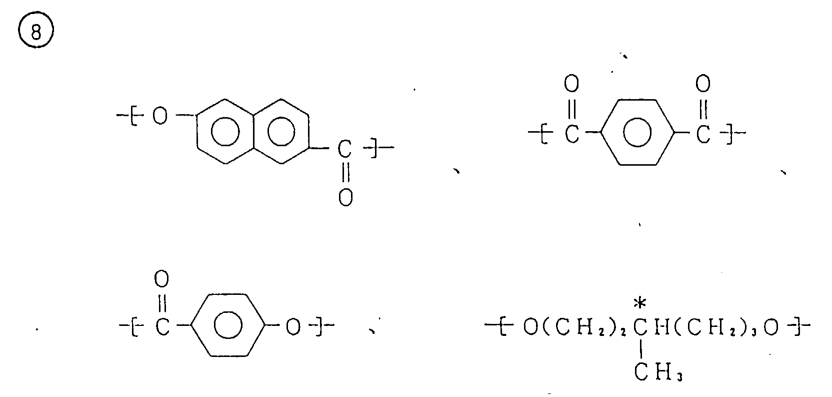

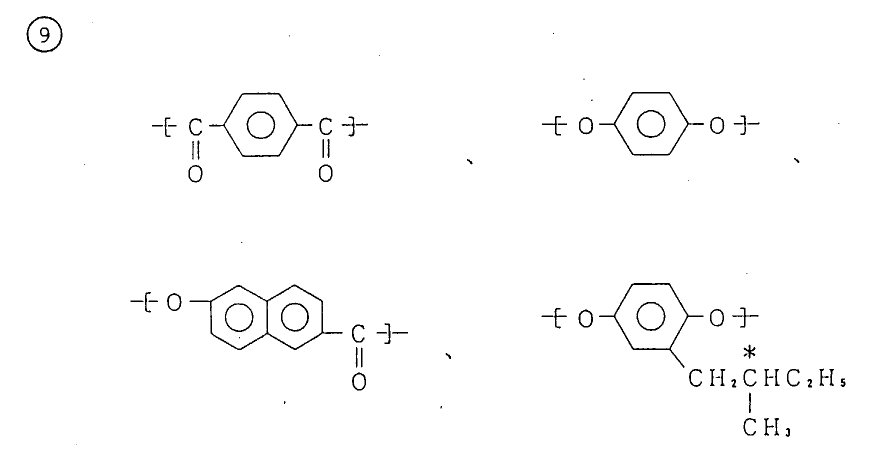

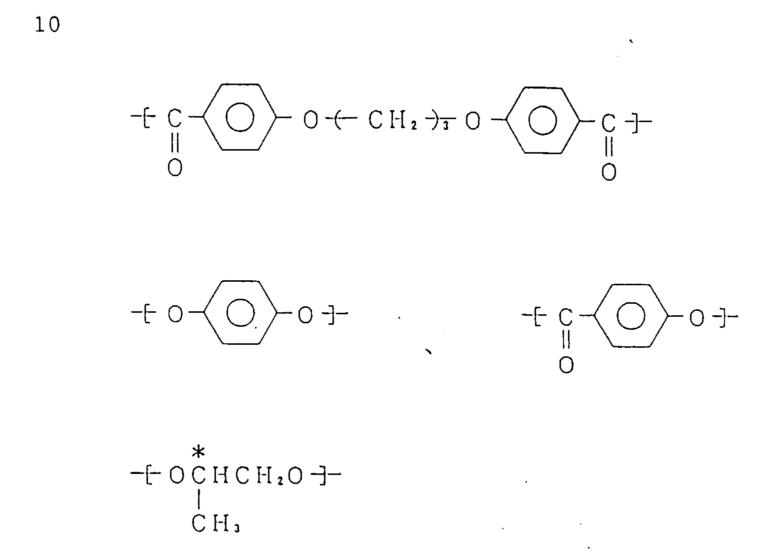

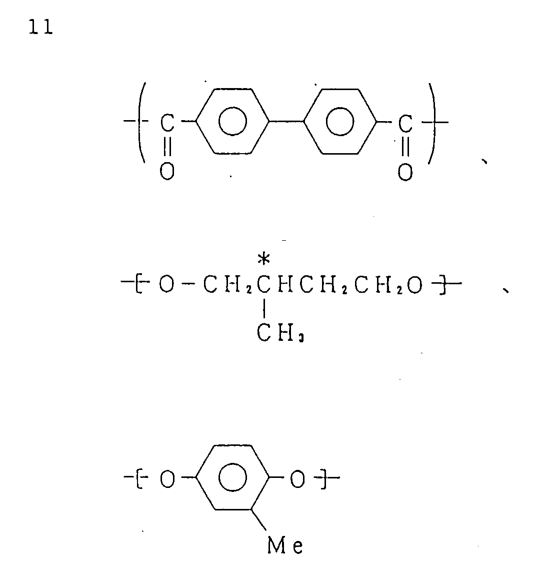

The liquid crystalline aromatic polyesters with an optically active group exemplified above preferably have a molecular weight in the range of from 0.01 to 10.0, more preferably 0.05 to 3.0, in terms of an inherent viscosity as determined at 30°C in a solvent, e.g. mixed phenol/tetrachloroethane (60/40) solvent. If the inherent viscosity does not fall within this range, it is likely that phase separation will occur when the polyester is mixed with the base polymer. The polyesters in question may be prepared by a known process such as, for example, a melt polycondensation process or an acid chloride process.

The liquid crystalline aromatic polyester with an optically active group prepared as described above is mixed with the liquid crystalline polymers as the base polymer, and thus is suitably employable in the invention.

The proportion of the optically active compound (including polymers) in the optically active, liquid crystalline polymer composition described above is usually in the range of 0.05 to 80 mole%, preferably 0.5 to 60 mole%.

The following description is now provided about the photoreactive site which controls the form of orientation under the radiation of light and also about the photoreactive compound having the said photoreactive site.

The "photoreactive site" as referred to herein indicates a site having a property capable of changing, by the radiation of light, an orientation form formed in the state of liquid crystal into an orientation form different from that before the irradiation, thus controlling the orientation form by the radiation of light, the orientation form being formed by a liquid crystalline aromatic polyester or an optically active, liquid crystalline aromatic polyester, with a photoreactive site incorporated therein, or a liquid crystalline aromatic polyester composition or an optically active liquid crystalline polyester composition, with a photoreactive site-containing compound incorporated therein, the polyesters or polyester compositions being obtained by incorporating a photoreactive compound having a photoreactive site into, or by introducing the site into the main or side chain of, the liquid crystalline polymer as the base polymer, e.g. a liquid crystalline aromatic polyester or an optically active, liquid crystalline, aromatic polyester.

As the photoreactive compound having the photoreactive site there may be used any photoreactive compound if only its photoreactive site possesses the above-mentioned property. Particularly preferred are those having a property of changing the twist angle of the liquid crystalline polymer, e.g. a liquid crystalline aromatic polyester or an optically active, liquid crystalline, aromatic polyester, as a result of light radiation. More concretely, an optically active photoreactive site having a property of undergoing a change in chirality upon exposure to light, a photoreactive site having a property of undergoing a change in its stereostructure upon exposure to light, and a photoreactive compound having one or more such sites, are preferebly employable.

Reference will be made to the photoreactive site which has a property of undergoing a change in chirality upon exposure to light and which eventually controls the orientation form in the state of liquid crystal, especially makes a control of the orientation form involving a change of twist angle. As examples of such a reactive site, mention may be made of those having a structure wherein the bond at an optical activity center is cleaved upon exposure to light, a structure wherein the radiation of light causes epimerization or racemization at an optical activity center, a structure wherein the radiation of light causes inversion of an optical activity center, or a structure wherein an optical activity center lies on a molecular axis and hence isomerization of another site results in inversion of the optical active site. The following are examples of such structures: 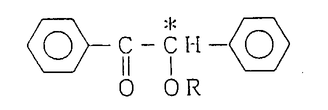 R is hydrogen or C₁₋₂₀ alkyl or aryl. 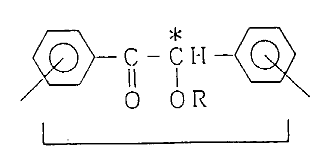 R is hydrogen or C₁₋₂₀ alkyl or aryl.
(The underline means that the structure of the underlined portion is incorporated.) 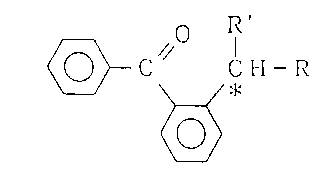 R and R' are each independently C₁₋₂₀ alkyl, alkoxy or aryl.
R≠R' 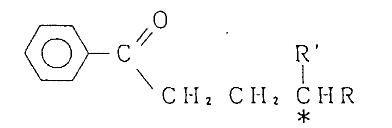 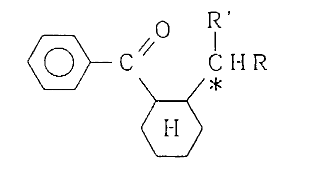 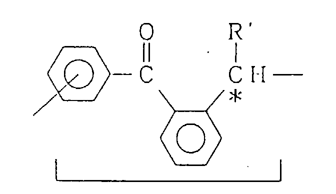 R' is C₁₋₂₀ alkyl, alkoxy or aryl. 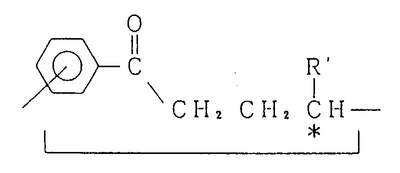 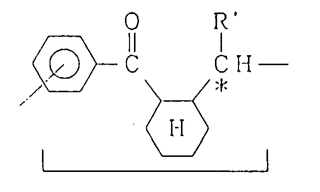 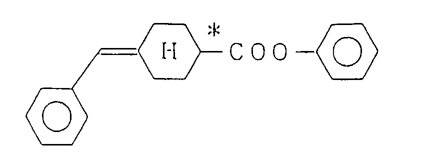 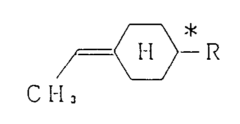 R is C₁₋₂₀ alkyl, alkoxy or aryl. 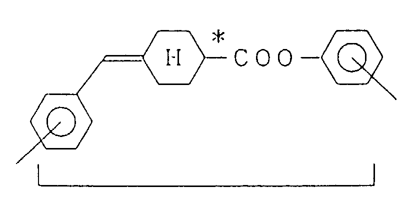 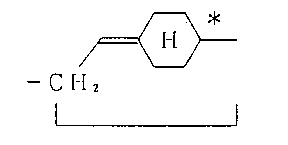 (The * mark indicates an optically active carbon.)

Reference will now be made to the photoreactive site which undergoes a change in its stereostructure upon exposure to light and which eventually can change the orientation form of the liquid crystalline polymer, e.g. a liquid crystalline aromatic polyester of an optically active, liquid crystalline, aromatic polyester. As a structural example of such a photoreactive site is mentioned a structure which undergoes isomerization upon exposure to light.

The following are more concrete examples: 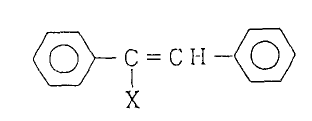 X is hydrogen, halogen, e.g. Cl or Br, or CN.

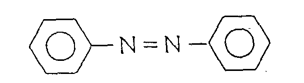

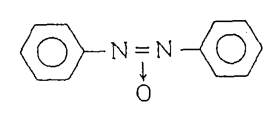

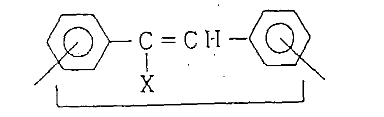

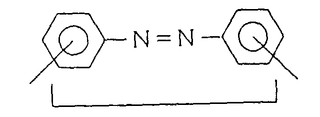

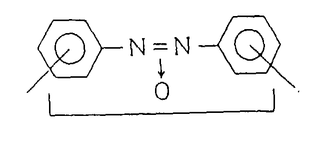

Even if the above photoreactive site which undergoes a change in its stereostructure is present in a compound not active optically, it will exhibit an effective action, but a more effective action will be exhibited if it is present in an optically active compound, particularly an optically active polymer. When viewed from the standpoint of an orientation form changing effect based on the radiation of light it is preferred that the photoreactive site be located in proximity to an optical activity center.

Further, from the standpoint of the same effect as that just mentioned above it is desirable that the photoreactive site which undergoes a change in both chirality and stereostructure be present in a liquid crystalline compound, particularly a liquid crystalline polymer. However, even if a compound having the photoreactive site does not exhibit liquid crystallinity, it is employable if it forms a uniform liquid crystal phase when incorporated in the liquid crystalline polymer as the base polymer, e.g. a liquid crystalline aromatic polyester or an optically active, liquid crystalline, aromatic polyester.

The photoreactive site described above can suitably afford the optical film of the present invention in both the case where one or plural compounds having the photoreactive site are incorporated in the liquid crystalline polymer as the base polymer, e.g. a liquid crystalline aromatic polyester or an optically active, liquid crystalline, aromatic polyester, and the case where one or more such photoreactive sites are introduced via covalent bonds or ionic bondsinto the main or side chain of the base polymer.

Description is now directed to the photoreactive compound having the photoreactive site. By this compound is meant a low-molecular compound, a high-molecular compound (i.e. a polymer) or both a low-molecular and a high molecular compound each having the optically active site set forth above. These compounds preferably have liquid crystallinity, but this does not constitute any limitation if only they form a uniform liquid crystal phase when mixed with the liquid crystalline polymer as the base polymer such as a liquid crystalline aromatic polyester or an optically active, liquid crystalline, aromatic polyester.

As examples of the photoreactive compound in question, reference will be made to the following low-molecular compounds: 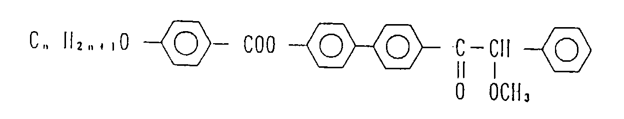 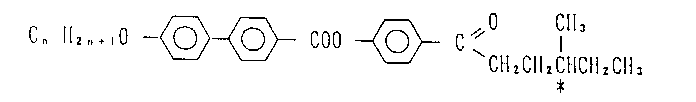 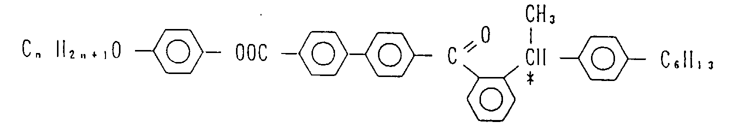 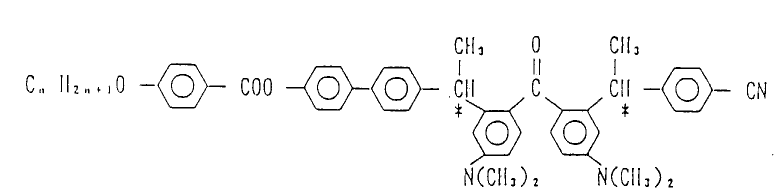 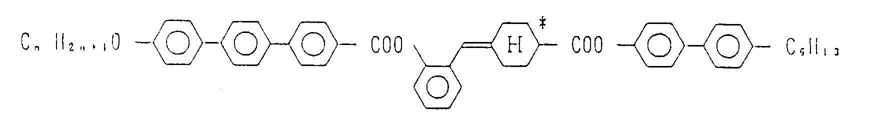 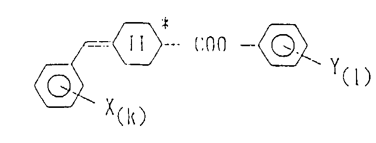 X and Y are each independently hydrogen, halogen, e.g. Cl or Br, C₁₋₄ alkyl or alkoxy, or phenyl, k and l are each 0 to 2. 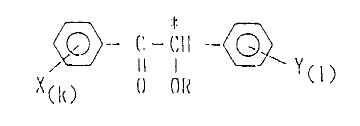 X and Y are each independently hydrogen, halogen, e.g. Cl or Br, C₁₋₄ alkyl or alkoxy, or aryl such as phenyl, k and l are each 0 to 2, and R is hydrogen, C₁₋₆ alkyl or aryl such as phenyl. 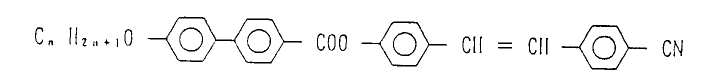 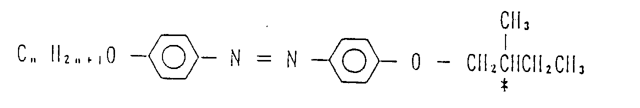 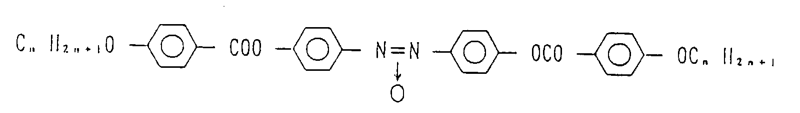 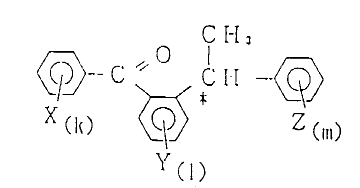 X, Y and Z are each independently hydrogen, halogen, e.g. Cl or Br, C₁₋₄ alkyl or alkoxy, amino, or amino having one or two C₁₋₄ alkyl groups, such as methylamino or dimethylamino, or phenyl, k and l are each 0 to 2.

But in the present invention it is desirable to use compounds which are somewhat high in molecular weight.

Examples of suitable polymers include dimers, trimers, tetramers and higher polymers of the low-molecular compounds having the photoreactive site of any of the foregoing structures, more particularly the following dimers, trimers, tetramers and polymers: 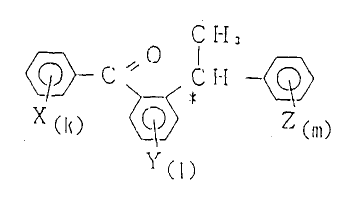 X, Y and Z are each independently hydrogen, halogen, e.g. Cl or Br, C₁₋₄ alkyl or alkoxy, amino, or amino having one or two C₁₋₄ alkyl groups, such as methylamino or dimethylamino, or phenyl, k and l are each 0 to 2.
having the following unit: 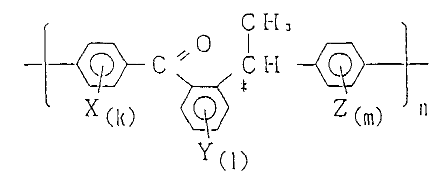 n=2 or more, preferably n=2∼4

Further examples include polyacrylates,
polymethacrylates, polymalonates, polysiloxanes, polyesters, polyamides, polyester amides, polycarbonates, polypeptides, cellulose, each having the foregoing photoreactive site, and mixtures thereof. Above all, polyesters, especially aromatic polyesters, are preferred. More concrete examples are as follows:

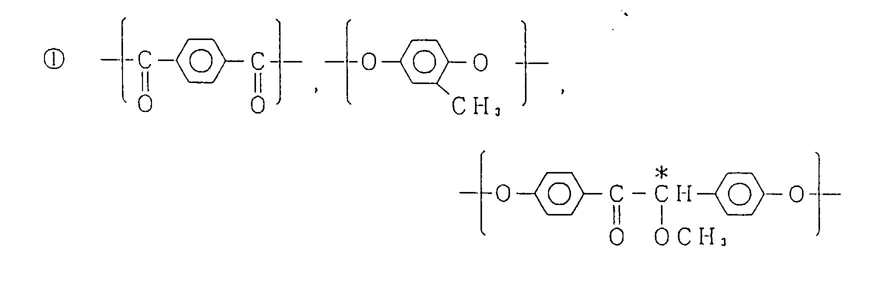

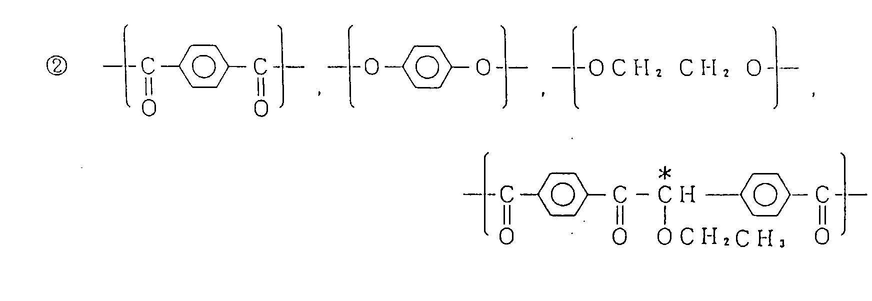

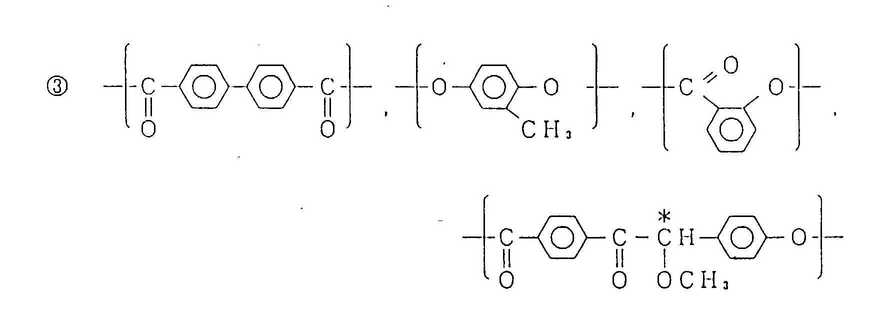

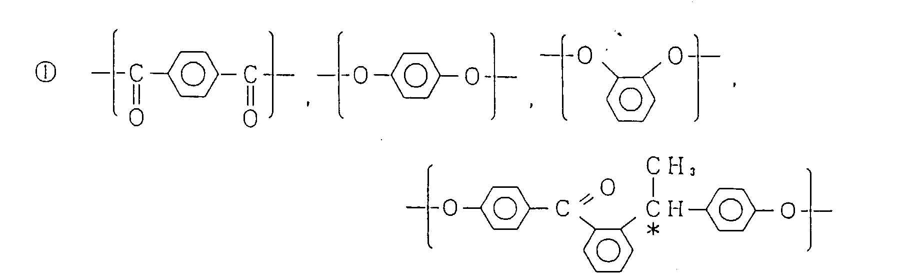

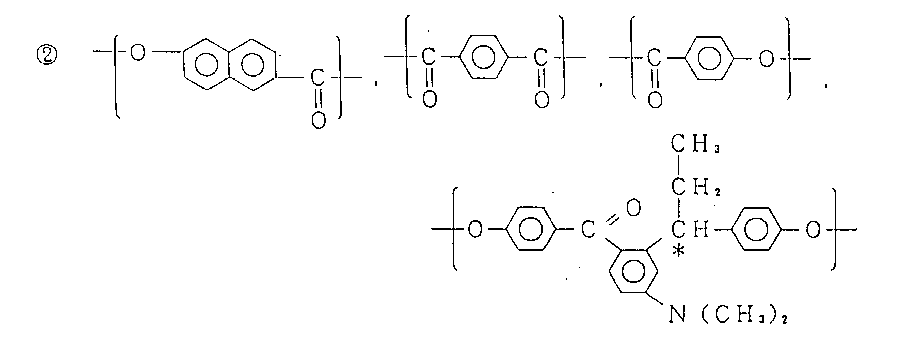

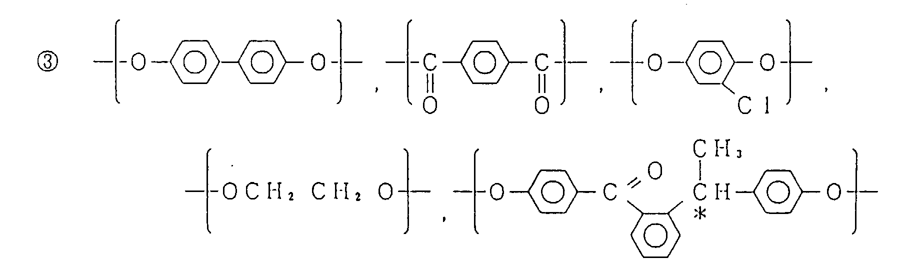

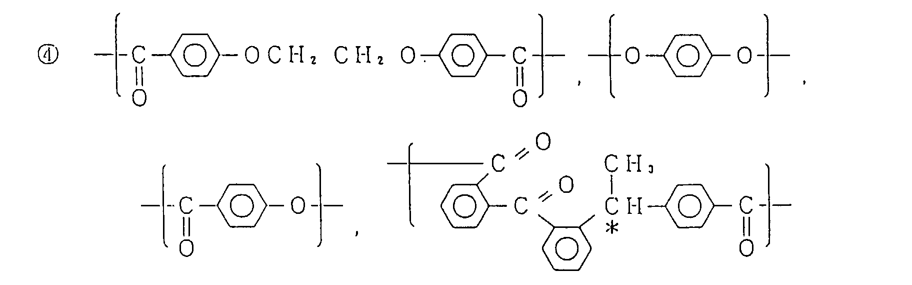

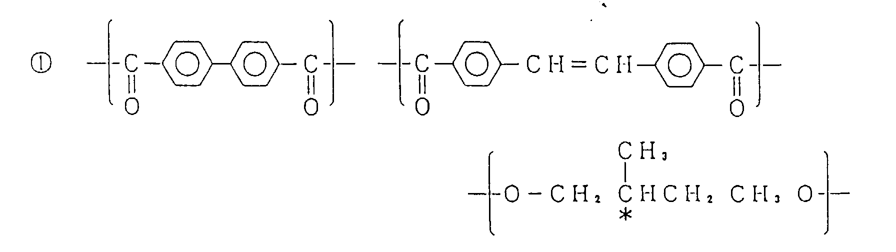

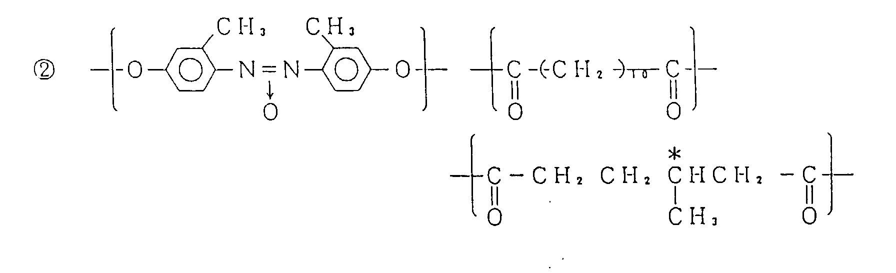

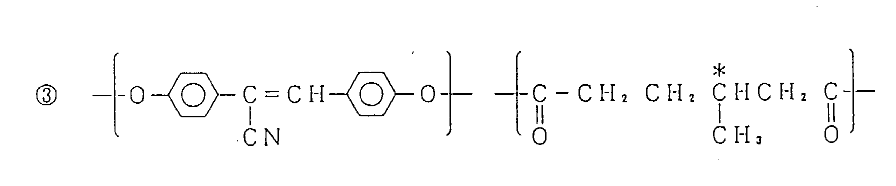

It is necessary that the proportion of the photoreactive site in each of the polymers exemplified above be selected appropriately in accordance with to what extent the twist angle is influenced by the photoreactive site or to what extent the orientation form is to be changed. But usually the said proportion is in the range of 0.1 to 80 mole%, preferably 0.5 to 50 mole%. If it is less than 0.1 mole%, it may be difficult to change the orientation form to a satisfactory extent, and if it is more than 80 mole%, there easily may occur phase separation from the liquid crystalline polymer as the base polymer such as, for example, a liquid crystalline aromatic polyester or an optically active, liquid crystalline, aromatic polyester.

The polymers exemplified above range in molecular weight preferably from 0.05 to 5.0 in terms of an inherent viscosity as determined at 30°C in a solvent, e.g. phenol/tetrachloroethane. If the inherent viscosity is larger than 5.0, the viscosity is too high and the deterioration of orientability may result, while if it is smaller than 0.05, it may be difficult to control the composition.

One or more photoreactive compounds may be incorporated in at least one liquid crystalline polymer or a composition containing at least one liquid crystalline polymer as the base polymer. Even if different kinds of photoreactive compounds are incorporated in such polymer or composition, there will be no problem if only they fall under the scope not impairing the effect of the present invention.

The mixing of the photoreactive compound with at least one liquid crystalline polymer or a composition containing at least one liquid crystalline polymer can be done, for example, by such a method as solid mixing, solution mixing, or melt mixing.

Reference will now be made to the liquid crystalline polymer having the photoreactive site in its main or side chain. This indicates a polymer obtained by introducing the photoreactive site having the foregoing property into the main chain or side chain of the base polymer described above. For example, it can be obtained by introducing a diol, dicarboxylic acid or hydroxycarboxylic acid having the photoreactive site into a liquid crystalline polyester or an optically active, liquid crystalline polyester. More specifically, a diol, dicarboxylic acid or hydroxycarboxylic acid having a photoreactive, optically active site which undergoes a change in its chirality or in its stereostructure upon exposure to light is introduced into the said main or side chain. The following are examples of such a compound (the * mark in the following formulae represents a photoreactive, optically active carbon): 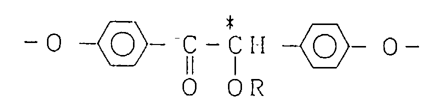 R is hydrogen, C₁₋₆ alkyl or aryl such as phenyl. 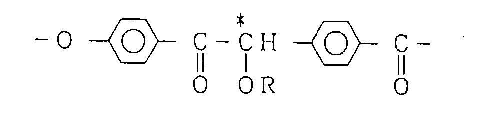 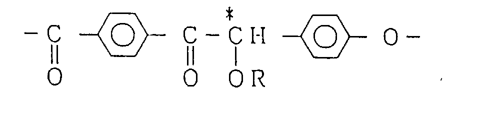 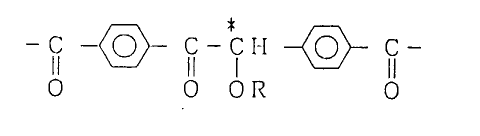 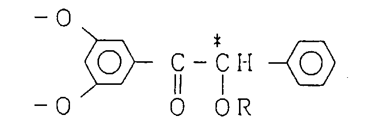 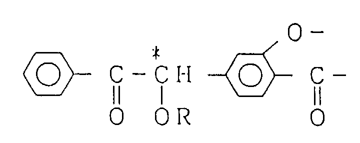 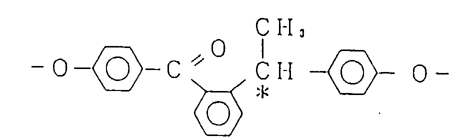 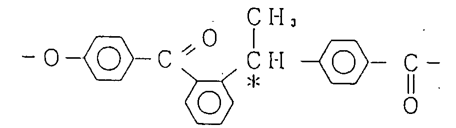 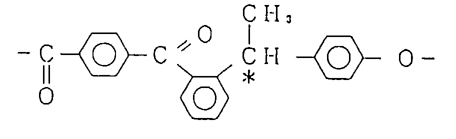 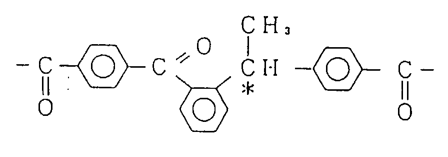 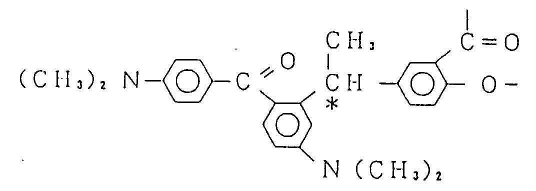 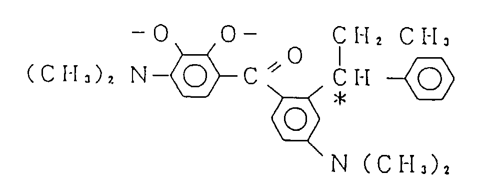 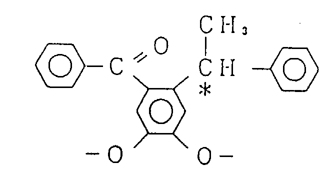 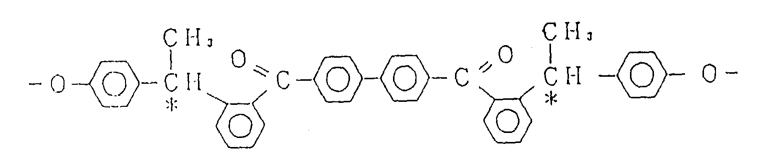 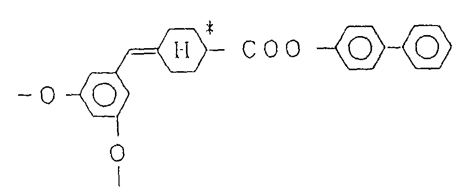 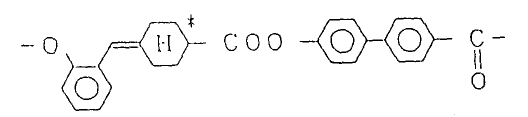 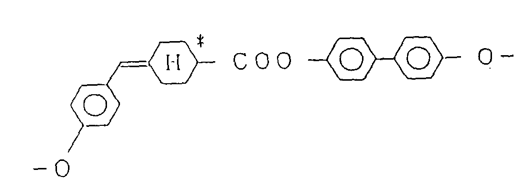 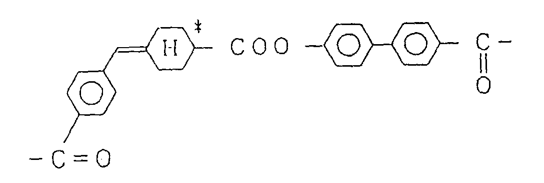 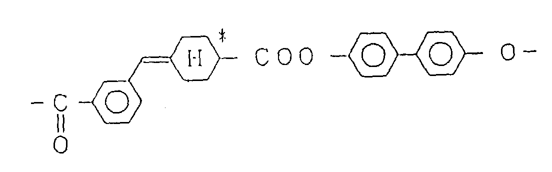 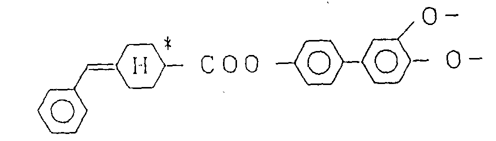 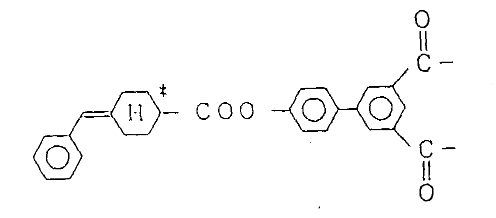 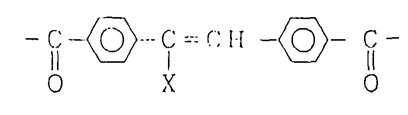 X is hydrogen, halogen, e.g. Cl or Br, CN, or C₁₋₄ alkyl or alkoxy 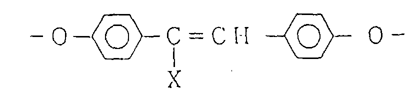 X is hydrogen, halogen, e.g. Cl or Br, CN, or C₁₋₄ alkyl or alkoxy 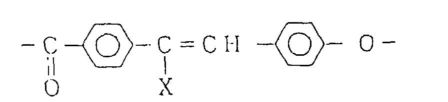 X is hydrogen, halogen, e.g. Cl or Br, CN, or C₁₋₄ alkyl or alkoxy

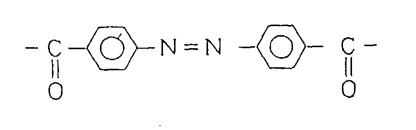

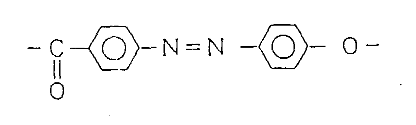

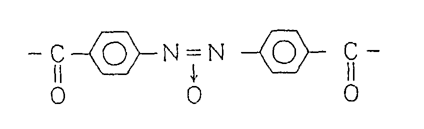

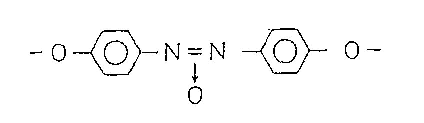

The proportion of the photoreactive site in the liquid crystalline polymer is usually in the range of 0.1 to 80 mole%, preferably 0.5 to 50 mole%, more preferably 1 to 30 mole%, still more preferably 5 to 25 mole%. If it is less than 0.1 mole%, it may be difficult to change the orientation form to a satisfactory extent, and a proportion thereof larger than 80 mole% may exert a bad influence on the orientability.

The molecular weight of the liquid crystalline polymer with the photoreactive site introduced therein is preferably in the range of 0.05 to 5.0 in terms of an inherent viscosity as determined at 30°C in a solvent, e.g. phenol/tetrachloroethane. An inherent viscosity greater than 5.0 may result in deteriorated orientability, and a lower viscosity than 0.05 may result in it being difficult to control the composition.

The liquid crystalline polymer with the photoreactive site introduced therein and composition containing at least one the same, which have been described above, may incorporate therein the foregoing low-molecular compound, high-molecular compound (i.e. polymer), or both, provided the resulting composition exhibitsa uniform liquid crystal phase as a whole.

As set forth above, the liquid crystalline polymer used in the present invention indicates any of a composition comprising as a base polymer at least one liquid crystalline polymer or a liquid crystalline polymer composition containing at least one liquid crystalline polymer, and at least one photoreactive compound incorporated in the base polymer, the photoreactive compound havig a property capable of changing, by the radiation of light, an oriented form formed by the base polymer in the state of liquid crystal into a form different from that before the irradiation, simultaneously with or after the irradiation; a liquid crystalline polymer having photoreactivity one or plural of whose reactive sites have been introduced into the side of main chain of a base polymer, the said liquid crystalline polymer having a property capable of changing, by the radiation of light, an oriented form into a form different from that before the irradiation, simultaneously with or after the irradiation, or a composition containing at least one such liquid crystalline polymer having photoreactivity; and a mixture of the two.

The following are typical examples of the liquid crystalline polymer used in the present invention.

Polymers represented by the following formula: 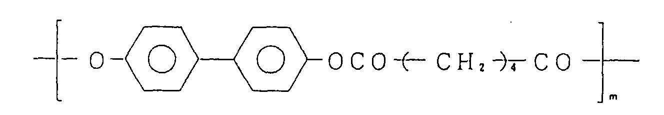 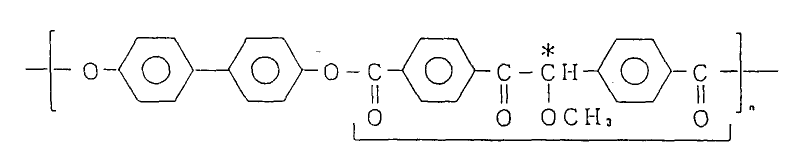 where m/n is usually in the range of 99.9/0.1 to 80/20, preferably 99.5/0.5 to 90/10, more preferably 99/1 to 95/5.

Polymers represented by the following formula: 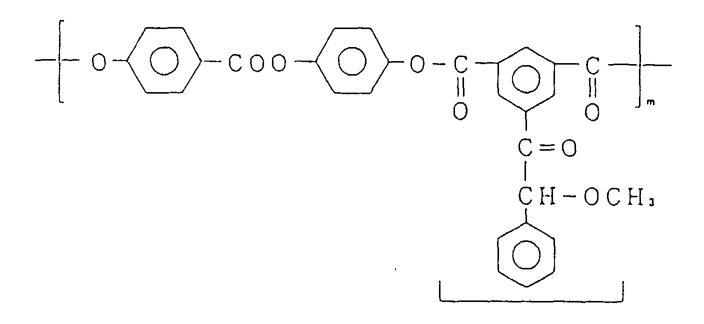 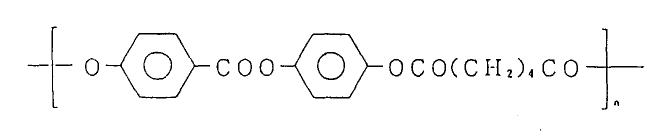 where m/n is 0.5/99.5 to 10/90, preferably 1/99 to 5/95. Polymers represented by the following formula: 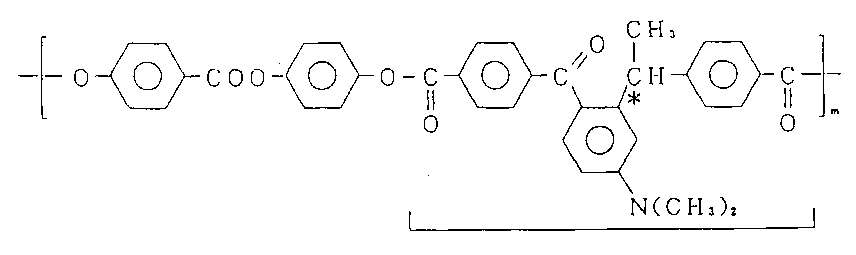 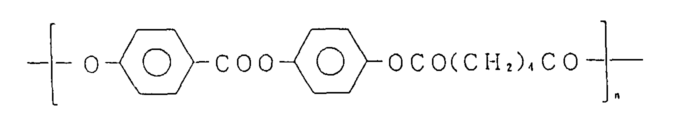 where m/n is 0.5/99.5 to 20/80, preferably 1/99 to 10/90.

Polymers represented by the following formula: 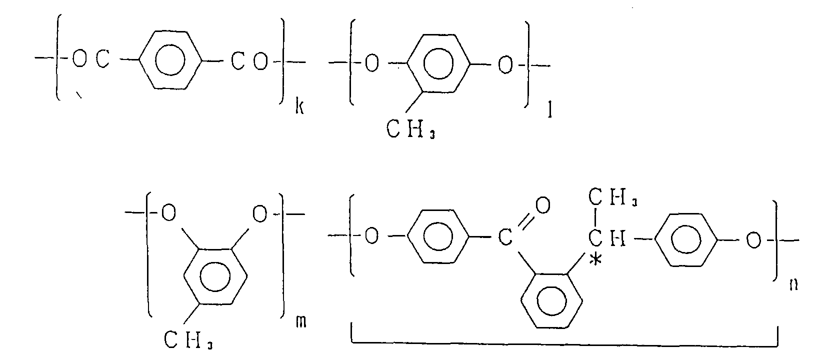 where k is 1+m+n, k/n is 99.5/0.5 to 50/50, preferably 99/1 to 80/20, and 1/m is 5/95 to 95/5.

Polymers represented by the following formula: 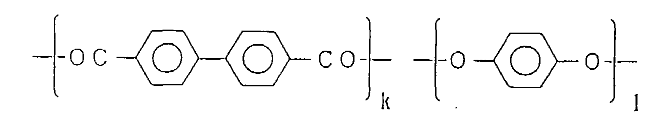 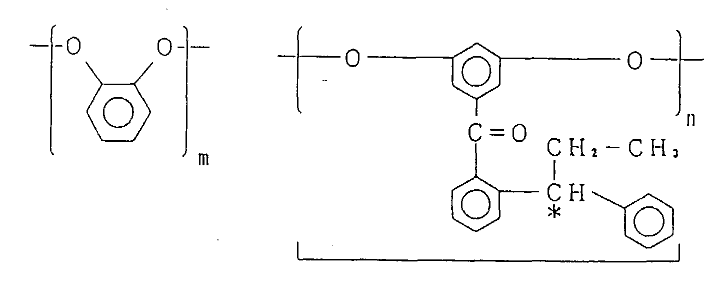 where k is 1+m+n, k/n is 99.5/0.5 to 90/10, preferably 99/1 to 95/5, and 1/m is 50/50 to 95/5.

Compositions represented by the following formulae: 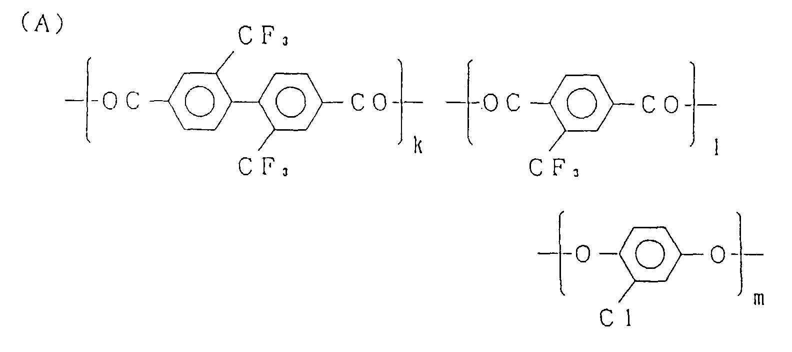 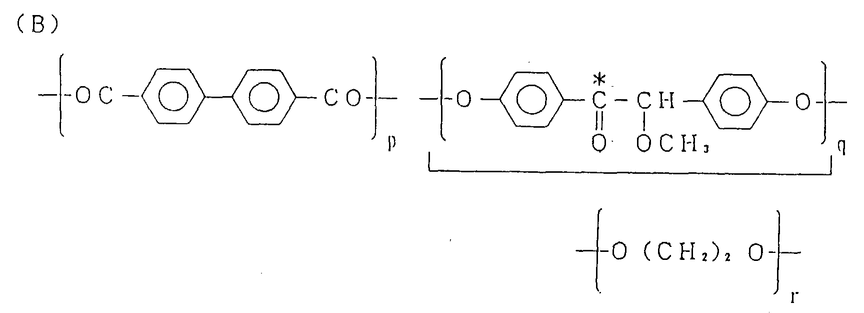 where (A)/(B) is usually in the range of 99.9/0.1 to 70/30 (weight ratio), preferably 99.5/0.5 to 80/20, more preferably 99/1 to 90/10, m is K+1, K/1 is 75/25 to 25/75, p is q+r, and q/r is 80/20 to 20/80.

Compositions represented by the following formulae: 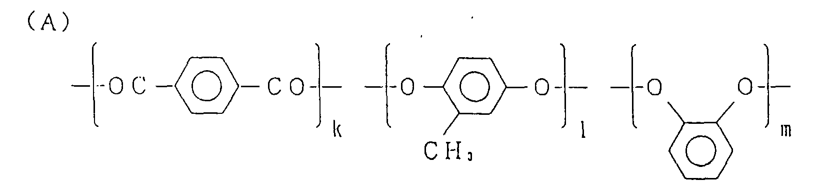 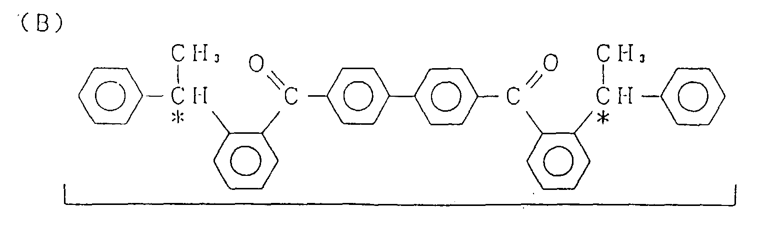 where (A)/(B) is usually in the range of 99.9/0.1 to 80/20 (weight ratio), preferably 99.5/0.5 to 90/10, more preferably 99/1 to 95/5, k is 1+m, and 1/m is 80/20 to 20/80. Compositions represented by the following formulae: 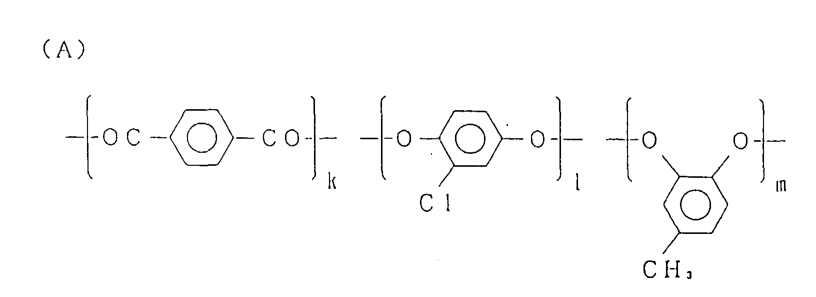 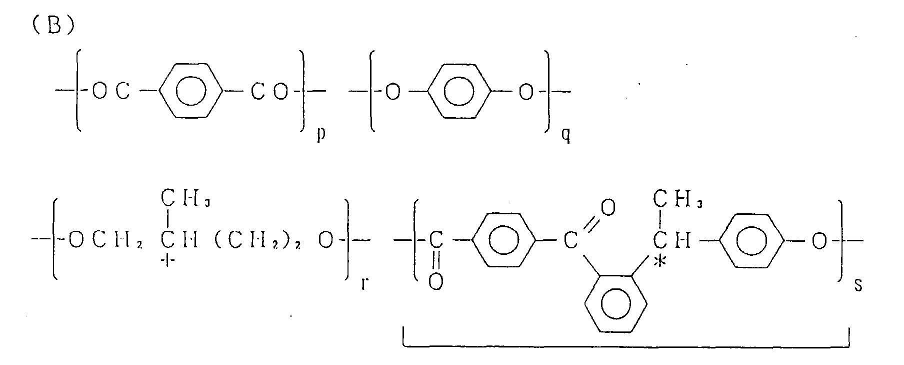 where (A)/(B) is usually in the range of 99.9/0.1 to 50/50 (weight ratio), preferably 99.5/0.5 to 70/30, more preferably 99/1 to 80/20, k is 1+m, 1/m is 25/75 to 75/25, p is q+r, q/r is 20/80 to 80/20, and p/s/ is 99/1 to 70/30.

Polymers represented by the following formula: 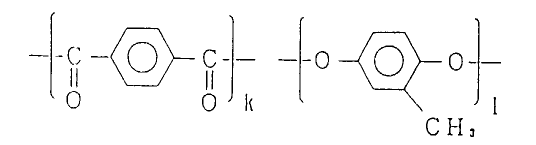 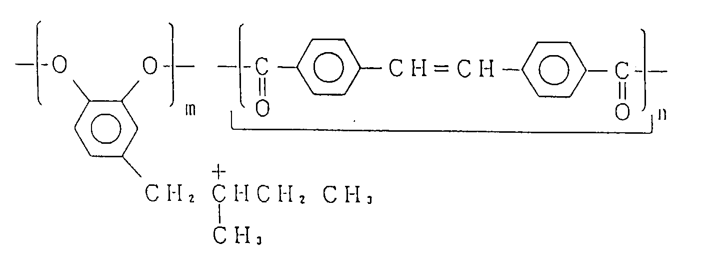 where k+n is equal to 1+m, k/n is usually in the range of 99/1 to 30/70, preferably 95/5 to 5/50, and 1/m is 75/25 to 25/75.

Compositions represented by the following formulae: 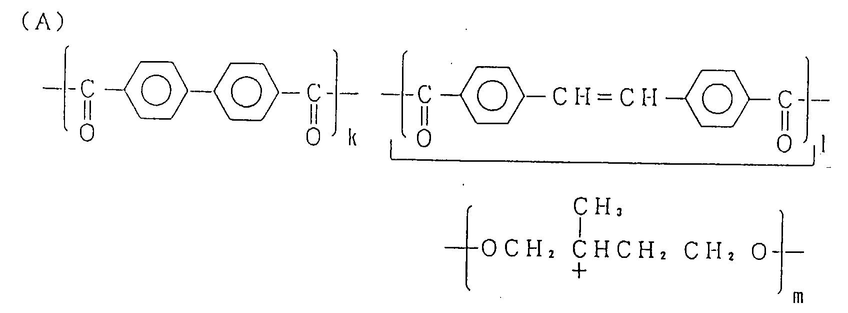 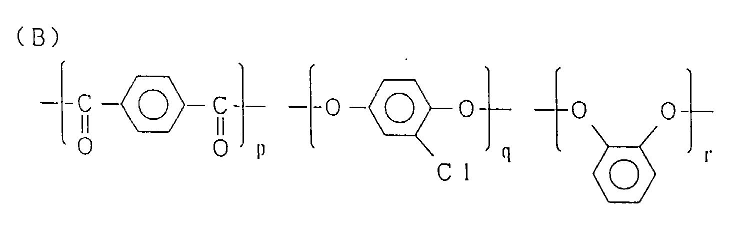 where (A)/(B) is usually in the range of 1/99 to 40/60 (weight ratio), preferably 5/95 to 20/80, m is k+1, k/1 is 99.5/0.5 to 0/100, preferably 90/10 to 10/90, p is q+r, and q/r is 20/80 to 80/20.

Polymers represented by the following formula: 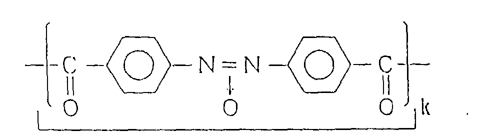 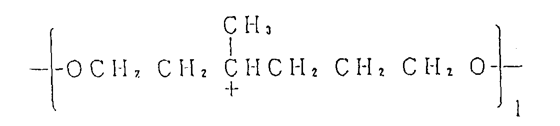 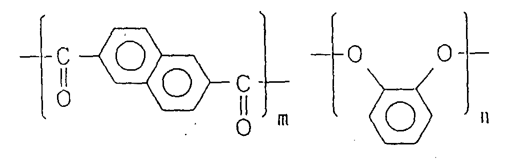 where k+m is equal to 1+n, k/m is 1/99 to 90/10, preferably 5/95 to 20/80, and 1/n is 25/75 to 75/25.

(In the above formulae the * mark stands for a photoreactive, optically active carbon, while the + mark stands for a non-photoreactive, optically active carbon, and the underline stands for a photoreactive site unit or a compound having a photoreactive site.)

Additives which per se do not exhibit liquid crystallinity such as, for example, surfactant and colorant, may be added to the liquid crystalline polymer described above which polymer can be changed its orientation form by the radiation of light, provided the liquid crystalline polymer containing such additives exhibit liquid crystallinity as a whole and the effect of the present invention is not impaired.

The optical film according to the present invention, which can control optical characteristics wholly or partially, is prepared by forming a film of the liquid crystalline polymer described above on an orienting substrate, then radiating light to at least a portion of the said film, thereby causing a change in an orientation form in the state of liquid crystal of the liquid crystalline polymer film, and fixing the orientation form.

As examples of the orienting substrate used in the present invention, mention may be made of plastic film substrates, glass substrates such as alkali glass, borosilicate glass and flint glass substrates, metallic foil substrates such as aluminum, iron and copper foil substrates. Particularly preferred are glass substrates, plastic film substrates, and metallic foil substrates, each having a rubbing-treated thin film of an organic compound such as polyimide or polyvinyl alcohol or having an obliquely vapor-deposited film of silicon dioxide, plastic film substrates which have been subjected to a drawing treatment of whose surfaces have been rubbed directly, and metallic foil substrates having directly-rubbed surfaces.

Examples of the plastic films referred to above include films of acrylic resins, e.g. polymethyl methacrylate, polyvinyl alcohols, polystyrenes, polycarbonates, polyether sulfones, polyphenylene sulfides, polyolefins, polyimides, polyamide-imides, polyether imides, polyamides, polyether ketones, polyether ether ketones, polyketone sulfides, polysulfones, polyphenylene oxides, polyethylene terephthalate, polybutylene terephthalate, polyacetals, epoxy resins, and phenolic resins.

The orienting treatment such as rubbing treatment for imparting an orienting ability to the orienting substrate may be carried out in any desired direction of the substrate.

Reference will now be made to the method for forming a film of the liquid crystalline polymer on the orienting substrate. Any method may be adopted for formation of the film. For example, the liquid crystalline polymer may be applied as a solution or as a melt onto the orienting substrate. From the standpoint of quality, including the film thickness, it is suitable to adopt a method wherein the liquid crystalline polymer is dissolved in an appropriate solvent and the resulting solution is applied onto the orienting substrate using an applicator, then is dried to form a film of the liquid crystalline polymer.

The solvent employable in preparing the liquid crystalline polymer solution differs depending on the kind of the liquid crystalline polymer used, but usually it is selected from among halogenated hydrocarbons such as chloroform, dichloroethane, tetrachloroethane, trichloroethylene, tetrachloroethylene, and o-dichlorobenzene mixed solvents of halogenated hydrocarbons and phenols such as phenol and p-chlorophenol, as well as tetrahydrofuran, dimethylformamide, dimethylacetamide, dimethyl sulfoxide, and N-methylpyrrolidone.

The concentration of the solution, which differs depending on the liquid crystalline polymer-solvent combination used, is usually in the range of 1 to 60 %, preferably 5 to 50 %, more preferably 10 to 30 %. As the coating method there may be adopted, for example, spin coating method, printing method, dipping/pulling-up method, roll coating method, curtain coating method, or slot coating method.

After the liquid crystalline polymer film is formed on the orienting substrate in the manner described above, there is performed a heat treatment for the purpose of orienting the film. In the heat treatment, for assisting the orientation based on an interfacial effect, the lower the viscosity of the liquid crystalline polymer in the formation of orientation, the better, and hence the higher the heat treatment temperature, the more preferable. But since the liquid crystalline polymer used in the present invention has in many cases an isotropic phase in a higher temperature region than the liquid crystal phase, it is desirable that the heat treatment temperature be lower than the transition temperature to the isotropic phase. Usually, the range from 50° to 300°C is suitable, and the range from 100° to 260°C is more suitable.

The time of the heat treatment required for obtaining satisfactory orientation on the orienting substrate differs depending on the kind of the liquid crystalline polymer used and the heat treatment temperature, but preferably it is in the range of 10 seconds to 120 minutes, more preferably 30 seconds to 60 minutes.

As the light used in irradiating the liquid crystalline polymer film in the invention there may be used, for example, the sun light, ultraviolet light, light from a halogen lamp, or light from a xenon lamp. It is necessary to select an appropriate light according to the kind of the liquid crystalline polymer used. Usually, ultraviolet light is suitable in the invention. Preferably there is used an ultraviolet light of 200 to 400 nm, more preferably 300 to 400 nm, and still more preferably 330 to 380 nm.

The dose of light varies depending on the kind of the photoreactive site used and the thickness of the liquid crystalline polymer film, but is usually in the range of 1 mJ/cm² to 500 J/cm², preferably 5 mJ/cm² to 100 J/cm², more preferably 10 mJ/cm² to 30 J/cm².

The partially irradiating method is not specially limited. A suitable method may be adopted according to the performance required. For example, there may be adopted a method which uses an exposure system having a photo-mask for resist exposure, a method which uses a stepper, or a method which uses a finely condensed light beam such as laser beam. Above all, the method which uses an exposure system having a photo-mask is preferred from the standpoint of mass-productivity. According to this method, even a micromachining of the order of several ten micron meters is feasible may be used. The exposure is preferably also altered. Alternatively a gradation mask having a plurality of regions that are different in light transmittance may be used. By these methods it is made possible to obtain an optical film of a large area wherein the control of orientation form based on a change in optical performance, especially the twist angle of the liquid crystalline polymer, is made for each fine pattern. As to the shape of the pattern there may be adopted a desired shape according to the purpose of use, such as, for example, striped, mosaic, or lattice shape.

By radiating light in amounts different from one fine region to another with any of the techniques referred to above it becomes possible to obtain an optical film which is suitably applicable to a micro-optical elements array wherein the orientation form has a different optical performance, more particularly a different twist angle, for each fine region. In this connection, the twisting direction of the liquid crystalline polymer which forms orientation having a twist structure can be set to any of right-handed twist and left-handed twist as desired by suitably selecting the kind of the optically active site in the photoreactive compound and that of the optically active site in the non-photoreactive compound.

The range of twist angle of the optical film produced by the method of the present invention is not specially limited. A suitable twist angle range may be selected on the basis of the optical performance required for the optical element to be obtained and according to the kind of the non-photoreactive, optically active site, that of the photoreactive, optically active site, their optical purities and concentrations in the liquid crystalline polymer, and the thickness of the optical film. But usually it is in the range of 50,000° to -50,000°, preferably 10,000° to -10,000°, more preferably 5,000° to -5,000°. It is also possible to produce an optical film with a twist angle exceeding 50,000° or smaller than -50,000°, but in this case it is necessary to increase the film thickness or enhance the concentration of the non-photoreactive, optically active site and that of the photoreactive optically active site. These may result in deteriorated orientability.

An optical film having the same optical performance throughout the whole surface thereof can also be prepared by radiating light uniformly to the whole surface of the liquid crystalline polymer film on the orienting substrate.

In the present invention, the light radiating timing is not specially limited if only it is within the period after coating to form the liquid crystalline film until fixing of the orientation formed. The radiation of light may be made even during the heat treatment, but the liquid crystalline polymer is in the state of liquid crystal during the heat treatment, so if it is brought into contact with the foregoing mask or the like, it may become difficult to form a uniform film. In view of this point, if a slight clearance is formed between the liquid crystalline polymer film and the mask to keep the two out of contact with each other, the subsequent radiation of light, particularly the radiation of light to a fine area, may not be done accurately. Thus, a more complicated process may result. Therefore, from the standpoint of simplification of the process, for example employability of the mask or the like in contact with the liquid crystalline polymer film, and accuracy of the light radiation to fine areas, it is desirable in the invention to perform the light radiation before start of the heat treatment or after the heat treatment is once conducted to fix the film.

The optical film according to the present invention can be prepared by repeating the process of light radiation → orientation → fixing, that is, irrespective of the state of the liquid crystalline polymer film, radiating light, allowing the liquid crystalline polymer to be oriented in the state of liquid crystal, and fixing the resulting orientation. More specifically, the following process patterns are considered for manufacturing the optical film of the present invention:
① Unoriented (solid state) → Irradiation → Orientation (liquid state) → Fixing (solid state)
② Orientation (liquid crystal) → Fixing (solid state) → Irradiation → Orientation (liquid crystal) → Fixing (solid state)
③ Orientation (liquid crystal) → Irradiation → Orientation (liquid crystal) → Fixing (solid state)
④ Unoriented (solid state) Irradiation Orientation (liquid crystal) - Fixing (solid → state) → Irradiation → Oriention (liquid crystal) → Fixing (solid state)

The "unoriented" film indicates a film of the liquid crystalline polymer formed on the orienting substrate and solidified without forming orientation, or a film of the liquid crystalline polymer which is in the state of polydomain. The manufacturing process according to the present invention is not limited to the above process patterns.
The last fixing step in the above process patterns may be followed again by irradiation, orientation in the state of liquid crystal, and fixing.

In the present invention it is necessary that an appropriate timing for controlling the orientation form by the radiation of light should be selected according to the kind of the optical film to be obtained, the kind of the liquid crystalline polymer used and the manufacturing line adopted, but when viewed broadly, such timing differs depending on whether the liquid crystalline polymer film formed on the orienting substrate is in the state of liquid crystal or in the state of solid. In the case where the liquid crystalline polymer film assumes the state of liquid crystal, the control of the orientation form can be done simultaneously with the radiation of light. On the other hand, when the liquid crystalline polymer film assumes a solid state, the control of the orientation form is performed in the following manner. After formation of a liquid crystalline polymer film on the orienting substrate, an orientation form is once obtained, for example by heat treatment, and is then fixed, and the liquid crystalline polymer film now assuming a solid state is irradiated with light. Alternatively, a liquid crystalline polymer film is formed on the orienting substrate and thereafter the film having been made into a solid state and unoriented is irradiated with light. Upon radiation of light, the irradiated portion does not exhibit any difference in appearance in a solid state from the appearance before the irradiation, but when heat is applied to the liquid crystalline polymer film at a temperature inducing the state of liquid crystal, more specifically by performing the foregoing heat treatment, there occurs a change in the orientation form in the state of liquid crystal under the action of the photoreactive site or a compound having the photoreactive site in the irradiated portion, and in this way it is possible to control the orientation form into a form different from that before the irradiation.

It is preferable in the invention that the orientation, e.g. twisted nematic orientation, nematic orientation, or twisted namatic orientation, formed by the liquid crystalline polymer film obtained as above and different in orientation form for each area or for each fine area, or by the liquid crystalline polymer film same in orientation form throughout the whole surface, be fixed by cooling to a temperature below the glass transition point of the liquid crystalline polymer. By using this method it is possible to obtain an optical film having a fixed orientation without impairment.

Generally, in the case of using a liquid crystalline polymer having crystal phase in a lower temperature portion than liquid crystal phase, there is a fear that its orientation in the state of liquid crystal may be destroyed by cooling. In the present invention such a phenomenon does not occur and it is possible to fix orientation without such destruction, because the polymer used in the invention has glass phase in a lower temperature region in which the polymer assumes a liquid crystal phase.

The cooling rate is not specially limited. Such orientation is fixed by mere transfer from within the heating atmosphere into an atmosphere held at a temperature below the glass transition point of the liquid crystalline polymer. For enhancing the production efficiency there may be performed a forced cooling such as air cooling or water cooling. But some liquid crystalline polymer may undergo a slight change in its twist angle at a certain cooling rate. In the case of using such a liquid crystalline polymer it is preferable that the cooling operation be conducted under conditions suitable for the properties of the same polymer.

The thickness of the liquid crystalline polymer film after fixing of its orientation, in other words, the thickness of the optical film according to the present invention, is not specially limited. Though depending also on the birefringence of the film, it is not smaller than 0.01 µm, preferably not smaller than 0.1 µm, more preferably not smaller than 0.5 µm, still more preferably not smaller than 1 µm. If the film thickness is smaller than 0.01 µm, it will be difficult to adjust the film thickness with a high accuracy, and a too large thickness will lead to deterioration of the orientation controlling ability. From this standpoint it is suitable for the film thickness to be not larger than 100 µm, preferably not larger than 50 µm, more preferably not larger than 20 µm, still more preferably not larger than 10 µm.

The optical film obtained by the above process according to the present invention does not exhibit fluidity on the orienting substrate, and even if it is stripped from the optical film, the film can retain its shape and orientation form, and thus it is fixed to an employable extent as the final product.

If the optical film of the present invention has a self-supporting property sufficient in practical use, the film as it is may be used as any of various optical elements. In the case where the film does not possess such self-supporting property, and even if the orienting substrate used is transparent and optically isotropic or is opaque and optically anisotropic, the film is employable as it is as a dsired optical element if its use as the optical element causes no problem.

For example, even in the case where the substrate used is an opaque substrate such as a thin metallic film or the like, the associated film is applicable to the use which utilizes reflection characteristic.

On the other hand, after fixing the orientation of the liquid crystalline molecular film on the orienting substrate, the film may be stripped from the substrate and transferred onto another substrate more suitable for the desired optical use.

For example, in the case where the orienting substrate used is necessary to obtain an orientation form but exerts an undesirable influence on the properties of the associated film to be used as an optical element, the substrate may be removed from the film after fixing of the orientation. More specifically, the following method may be adopted.

A substrate (hereinafter referred to as the "second substrate") suitable for the desired optical element and the optical film on the orienting substrate are affixed together using an adhesive or a pressure-sensitive adhesive. The orienting substrate is stripped at the interface with the optical film, allowing the optical film to be transferred onto the second substrate, to afford the desired optical element.

The second substrate for use in the transfer is not specially limited if only it has a moderate flatness. For example,when the optical element is a transmission type optical element, the second substrate is preferably a glass sheet or a transparent plastic film having optical isotropy. As examples of such a plastic film there are mentioned films of polymethacrylates, polystyrenes, polycarbonates, polyether sulfones, polyphenylene sulfides, polyarylates, amorphous polyolefins, triacetyl cellulose, and epoxy resins. Particularly, films of polymethyl methacrylates, polycarbonates polyarylates, triacetyl cellulose, and polyether sulfones, are preferred. Even optically anisotropic ones are employable if their use as the desired optical element presents no problem. Examples of such films include a stretched polyethylene terephthalate film and a retardation film of a polycarbonate.

Another example of the light transmitting substrate is a polarizing film. The polarizing film is an optical element essential to a liquid crystal display. If the polarizing film is used as the light transmitting substrate, there can be obtained an optical element as an integral body of both the optical film of the present invention and the polarizing film. This is very convenient.

As a further example of the second substrate, mention may be made of a liquid crystal display cell itself. The liquid crystal display cell uses two upper and lower glass substrates with electrodes. If the optical film of the present invention is transferred to one or both of those glass substrates of the display cell, the glass substrate(s) per se serves as a desired optical element. Further, the glass substrate(s) which constitutes the display cell per se may be used as the orienting substrate in preparing the optical film of the present invention. It is also possible to incorporate the optical film into the display cell.

Where the optical film of the invention is to be applied to a reflection type optical element, there may be used as the substrate for transfer, for example, a transparent or opaque glass plate, plastic film, or metallic plate. Examples of such a metallic plate include copper, stainless steel and aluminum plates.

The adhesive or pressure-sensitive adhesive for affixing the second substrate for transfer and the optical film of the invention to each other is not specially limited if only it is of an optical grade. For example, there may be used an adhesive or pressure-sensitive adhesive using an acrylic or epoxy resin or using ethylene-vinyl acetate copolymer or rubber.

The transfer onto the second substrate suitable for an optical element using the optical film of the invention can be done by stripping, after the bonding, the orienting substrate at the interface between it and the optical film. For example, the stripping can be done by any of a mechanical method using a roll or the like, a method involving dipping the laminate in a solvent which is a poor solvent for all of the constituent materials and subsequent mechanical separation of the orienting substrate from the optical film, a method involving application of an ultrasonic wave in a poor solvent to strip the orienting substrate from the optical film, a method wherein a temperature change is induced by utilizing the difference in thermal expansion coefficient between the orienting substrate and the optical film to strip the former from the latter, and a method wherein the orienting substrate itself or an alignment film thereon is dissolved off. Since the releasability differs depending on the adherence between the liquid crystalline polymer used and the orienting substrate, there should be adopted a method most suitable for the system used.

The following description is now provided about application examples of optical elements using the optical film prepared by the method of the present invention and having in a single plane a plurality of areas exhibiting different optical characteristics.

For example, mention may be made of an application as a field angle improving plate for a liquid crystal display. As a field angle improving method for a liquid crystal display there has been proposed a method wherein the picture elements in a liquid crystal cell are divided and orientation-controlled each independently (see, for example, JP5-224207A). But this method is complicated and so presents a problem in point of cost. Also proposed is a method of improving the field angle characteristic by using a compensation layer of twisted nematic liquid crystal (see, for example, JP5-40277A). According to this method, however, the field angle improving effect does not cover all directions, but the method merely involves a direction movement for a better field angle. Thus, a limit has been encountered as a technique for improving the field angle characteristic. On the other hand, by using an optical element which employs the optical film according to the present invention, it is possible to improve the field angle in all directions easily. More specifically, by using the optical film of the invention it is possible to fabricate a microoptical element having a structure such that an area having an optical characteristic which permits improvement of the field angle in the upward direction for example and an area having an optical characteristic which permits improvement of the field angle in the downward direction are present in a single picture element, when incorporated in a liquid crystal display, by radiating light through a photomask to adjust the twist angle or twist direction of the optical element comprising a twisted nematic liquid crystal. By using such an optical element it is possible to fabricate a liquid crystal display improved in its field angle characteristic in plural directions such as upward and downward directions of right and left directions.

Mention may also be made of application to a three-dimensional liquid crystal display. By preparing an optical film whose optical rotatory power is controlled for each pixel level microscopic area of, say, striped or mosaic pattern in a liquid crystal display in accordance with the method of the present invention, and by using such optical film, it becomes possible to fabricate a microoptical rotator. If there is used a microoptical rotator wherein when incorporated in a liquid crystal display the light emitted is orthogonal for each pixel area, it becomes possible to separate information into one for the right eye and the other for the left eye, thus permitting application to a 3D display.

Further, mention may be made of application as a novel color filter for a liquid crystal display. More specifically, if the twist angle of the liquid crystalline polymer layer is adjusted for example by a method involving radiation of ultraviolet light through a mask, and if three types of areas are set so that the three primary colors of R, G and B can be expressed by virtue of birefringence effect between polarizing plates, it is possible to obtain color filter for a liquid crystal display using the optical film of the present invention. In this case, if the twist angle for each picture element is controlled by using a gradation mask of a structure such that the amount of ultraviolet light transmitted varies in three stages pixel by pixel, then the setting of the three primary colors of R, G and B can be effected in a single exposure, thus permitting a more effective production.

Mention may also be made of application to a color compensator for an STN liquid crystal display is fabricated by using an optical film having such a twist angle as is different only in part and is used actually, it becomes possible to make a display of a different color only in part on the STN liquid crystal display. By this display it is made possible to divide the contents of information, whereby various displays can be realized.

Further, mention may be made of application as a color reflection board for a reflection type liquid crystal display. In the case of a twisted nematic liquid crystal, a fresh cholesteric color can be observed by selective reflection when the product of the twist pitch and an average refractive index is within the visible light range. If an optical film is prepared by the method of the present invention in such a manner that the twist angle of the liquid crystalline polymer layer is adjusted for each picture element by the radiation of light and that selective reflection is made in each of the three primary color wavelength regions of R, G and B, and if a microoptical element using the said optical film is incorporated in a reflection type liquid crystal display as a substitute for the reflection board, there can be realized a color display. In this case, if the microoptical element is of a structure which pairs with a λ/4 plate, there will be attained a greater effect.

Thus, according to the method of the present invention it is possible to prepare an optical film having plural areas of different optical properties in a single plane and therefore it is possible to easily obtain optical films which are applicable to various optical elements.

### [Examples]

The following examples are given to further illustrate the present invention, but it is to be understood that the invention is not limited thereto. Analyzing methods were used in the examples, which are as follows:

### (1) Determining the Composition of Liquid Crystalline High-molecular Compound

A liquid crystalline high-molecular compound is dissolved in deuterated chloroform or deuterated trifluoroacetic acid and its composition is determined using 1H-NMR of 400 MHz (JNM-GX400, a product of Japan Electron Optics Laboratory Co., Ltd.)

### (2) Determining Inherent Viscosity

Determined in a mixed phenol/tetrachloroethane (60/40 weight ratio) solvent at 30°C using a Ubbelohde viscometer.

### (3) Determining Liquid Crystal Phase Series

Determined by measurement using a DSC (Du Pont 990 Thermal Analyzer) and observation using a polarizing microscope (Olympus BH2) equipped with a hot state (Mettler FP82).

### (4) Determining Twist Angle and Δn·d

Twist angle is determined from polarization analysis or selective reflection wavelength, while Δn·d is determined by the analysis of data obtained by an ellipsometer.

### Example 1

There was prepared a 17 wt% solution of a liquid crystalline polymer composition in phenol/tetrachloroethane (60/40 weight ratio), the liquid crystalline polymer composition containing a liquid crystalline high-molecular compound A (inherent viscosity: 0.15) and a photoreactive compound B at a weight ratio of 98:2. The solution was then applied onto a 1 mm thick glass plate having a size of 15 cm by 23 cm and having a rubbing-treated polyimide layer by means of a screen printer and subsequently dried to afford a photoreactive, liquid crystalline polymer film. Next, with a high-pressure mercury vapor lamp, ultraviolet light was applied 10 J/cm² to the film through a photomask having a stripe pattern of 100 µm width and 100 µm spacing. The film was then heat-treated at 200°C for 10 minutes to form a twisted nematic orientation and thereafter cooled to fix the orientation. This optical film was found to have a Δn·d of 880 nm, a twist angle of -130° in the irradiated portion and a twist angle of -200° in the unirradiated portion (mask portion).

The optical film as formed on the substrate was held between polarizing plates and the color of transmitted light was observed; as a result, different colors were observed in the form of the stripe pattern. Thus, it exhibited a satisfactory performance as a microoptical element.

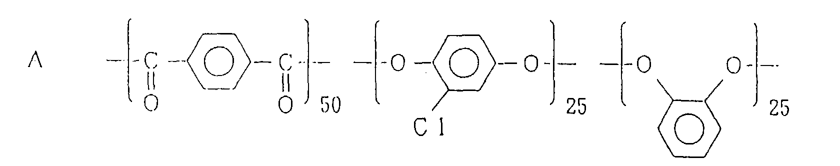

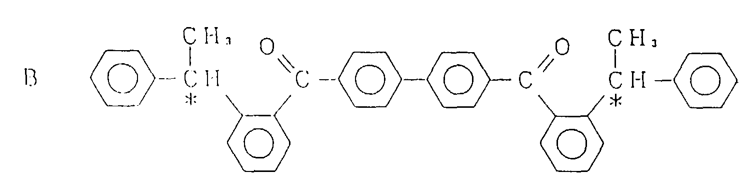

### Comparative Example 1

The procedure of Example 1 was repeated except that the photoreactive compound B was not used. The resulting optical film was found to have a Δn·d of 890 nm and a twist angle of 0°, which was common to the whole surface of the film, with no difference recognized between the irradiated portion and the unirradiated portion.

The optical film as formed on the substrate was sandwiched in between polarizing plates and the color of transmitted light was observed; as a result the same color was observed through the whole surface. Thus, the film was not employable as a microoptical element.

### Example 2

There was prepared a 15 wt% solution of a photoreactive, liquid crystalline polymer composition in phenol/tetrachloroethane (60/40 weight ratio), the photoreactive liquid crystalline polymer composition containing a liquid crystalline high-molecular compound C (inherent viscosity: 0.16) and a photoreactive high-molecular compound D (inherent viscosity: 0.18) at a weight ratio of 96:4. The solution was then applied, using a spin coater, onto a polyether ether ketone (PEEK) film of 15 cm by 15 cm which had been subjected directly to a rubbing treatment, and was then dried to afford a film of the liquid crystalline polymer composition. Then, with a high-pressure mercury vapor lamp, ultraviolet light was applied 20 J/cm² to the film through a photomask having a stripe pattern of 100 µm width and 100 µm spacing. The film was then heat-treated at 210°C for 10 minutes to form a twisted nematic orientation and thereafter cooled to fix the orientation.

Onto this optical film was then affixed a 50 µm thick polyether sulfone (PES) film as a second substrate having the same size as that of optical film through a UV-curable acrylic resin adhesive. Next, the PEEK film used as an orienting substrate was stripped slowly, allowing the optical film to be transferred onto the PES film subsrate. This optical film was found to have Δn·d of 720 nm, a twist angle of -90° in the irradiated portion and a twist angle of -260° in the unirradiated portion.

The optical film as transferred onto the PES film was held between polarizing plates and the color of transmitted light was observed; as a results, different colors were observed in the form of the stripe pattern.

Thus, the optical film proved effective as an optical element having different optical characteristics in a single plane.

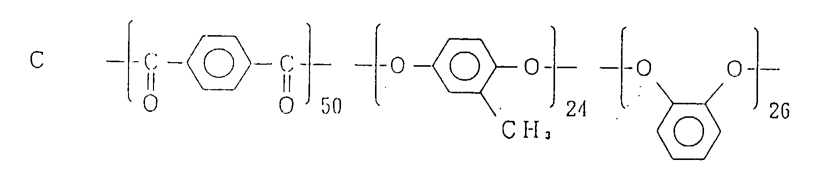

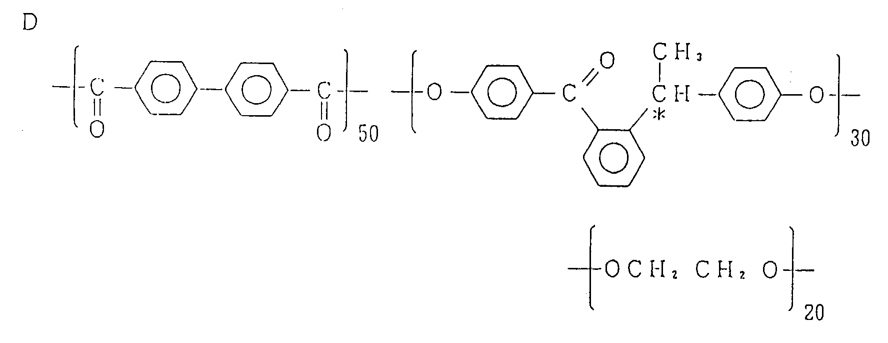

### Example 3

There was prepared a 20 wt% solution of a photoreactive, liquid crystalline polymer composition in N-methylpyrrolidone, the photoreactive liquid crystalline polymer composition containing a liquid crystalline high-molecular compound E (inherent viscosity: 0.16) and a liquid crystalline high-molecular compound F (inherent viscosity: 0.20) at a weight ratio of 98:2. Then, using a screen printer, the solution was applied onto a polyimide (PI) film substrate of 15 cm by 15 cm which had been subjected directly to a rubbing treatment, and was then dried to afford a film of the liquid crystalline polymer composition. Subsequently, with a high-pressure mercury vapor lamp, ultraviolet light was applied 30 J/cm² to the film through a photomask having a stripe pattern of 100 µm width and 100 µm spacing. The film was then heat-treated at 210°C for 10 minutes and thereafter cooled to fix the orientation formed.

Onto this optical film was then bonded a 50 µm thick polycarbonate (PC) film as a second substrate having the same size as that of optical film through a UV-curable acrylic resin adhesive. Then, the PI film used as an orienting substrate was stripped slowly, allowing the optical film to be transferred onto the PC film. The optical film was found to have Δn·d of 1.06 µm, a twist angle of 0° in the irradiated portion and a twist angle of -90° in the unirradiated portion (mask portion).

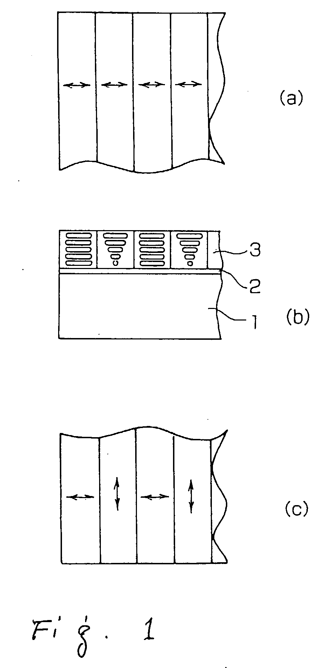

A linearly polarized light parallel to the rubbing direction was directed to the optical film formed on the PC film, and the state of exit light was observed under rotation of polarizing plates. As a result, in the UV radiated portion, the light transmitted when the transmission axis of the exit-side polarizing plate was parallel to the polarization direction of the incident light, while when both were orthogonal to each other, a dark field resulted. In contrast therewith, in the mask portion, a dark field resulted when the transmission axis of the exit-side polarizing plate was parallel to the polarization direction of the incident light,and the light transmitted when both were orthogonal to each other. Thus, the optical film proved effective as an optical element satisfying optical characteristics required for a striped microoptical rotator (as schematically illustrated in Fig. 1).

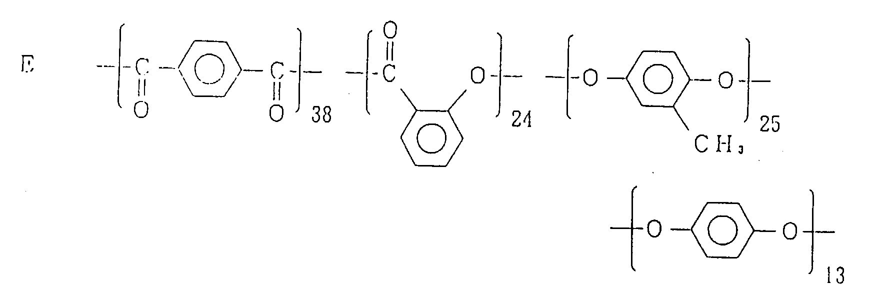

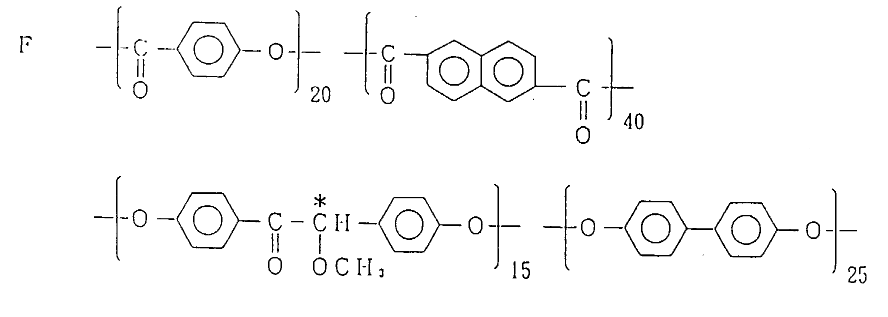

### Comparative Example 2

The procedure of Example 3 was repeated except that a non-photoreactive, liquid crystalline high-molecular compound G (inherent viscosily: 0.19) was used in place of the liquid crystalline high-molecular compound having a photoreactive site, to afford an optical film. This optical film was found to have a Δn·d of 1.04 µm and a twist angle of -92°, which was common to the whole surface of the film, with no difference recognized between the irradiated portion and the unirradiated portion.

The optical film was then checked for optical performance in the same way as in Example 3 to find that the optical performance thereof was the same throughout its whole surface. Thus, it proved unemployable as a microoptical rotator.

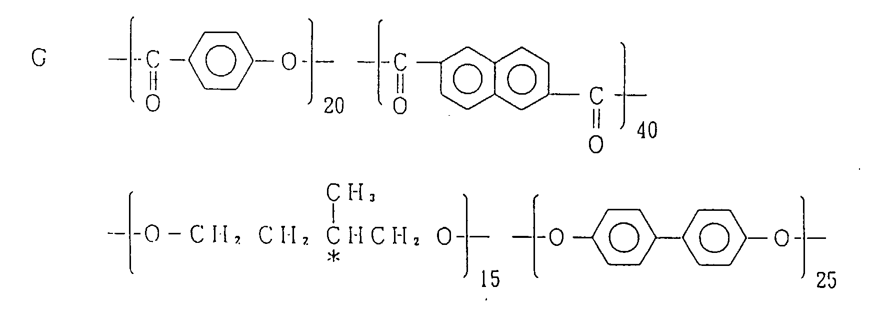

### Example 4

There was prepared a 15 wt% solution of a photoreactive, liquid crystalline high-molecular compound H (inherent viscosity: 0.17) in phenol/tetrachloroethane (60/40 weight ratio). Then, using a spin coater, the solution was applied, onto a 1 mm thick glass substrate having a polyimide layer of 15 cm by 23 cm which had been subjected to a rubbing treatment, and was then dried to give a photoreactive, liquid crystalline polymer film.
Subsequently, with a high-pressure mercury vapor lamp, ultraviolet light was applied 20 J/cm² to the film through a photomask having a stripe pattern of 100 µm width and 100 µm spacing. Thereafter, the film was heat-treated at 220°C for 10 minutes and then cooled to fix the orientation formed.

This optical film was found to have a Δn·d of 300 nm, a twist angle of -170° in the irradiated portion and a twist angle of -210° in the unirradiated portion (mask portion).

The optical film as formed on the glass substrate having a polyimide layer was then held between polarizing plates and checked for the color of transmitted light. As a result, different color were observed in the stripe pattern form, and thus, the optical film proved effective in its use as a microoptical element.

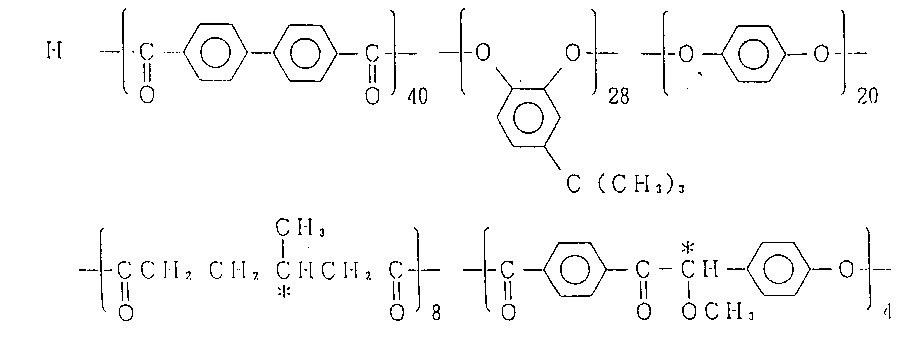

### Comparative Example 3

Using a liquid crystalline high-molecular compound I (inherent viscosity: 0.17) not having a photoreactive site, the procedure of Example 4 was repeated to give an optical film. The film was found to have a Δn·d of 300 µm and a twist angle of -150°, which was common to the whole surface of the film, with no difference recognized between the irradiated portion and the unirradiated portion.

Then, the film was held between polarizing plates and checked for the color of transmitted light in the same way as in Example 4. As a result, the same color was observed throughout the whole surface of the film, and thus the film proved unemployable as a microoptical element.

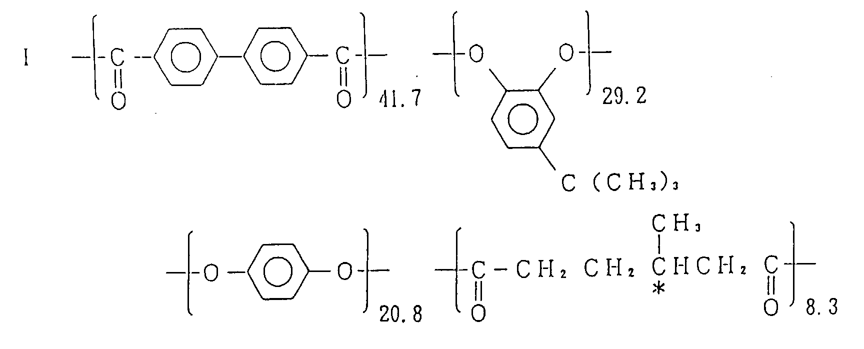

### Example 5

There was prepared a 20 wt% solution of a photoreactive, liquid crystalline polymer composition in dimethylformamide, the photoreactive liquid crystalline polymer composition containing a liquid crystalline high-molecular compound J (inherent viscosity: 0.20) and a photoreactive, liquid crystalline high-molecular compound K at a weight ratio of 97:3. Then, using a screen printer, the solution was applied, onto a 1 mm thick glass substrate having a size of 15 cm by 23 cm and having a polyimide layer which had been subjected to a rubbing treatment, and was then dried to give a film of the photoreactive, liquid crystalline polymer.

A half of the film surface was covered with aluminum foil, and ultraviolet light was applied 1 J/cm² to the film by means of a high-pressure mercury vapor lamp, followed by heat-treated at 80°C for 15 minutes and subsequent cooling to fix the orientation formed.

This optical film was found to have a Δn·d of 880 nm, a twist angle of -50° in the irradiated portion and a twist angle of -70° in the unirradiated portion (mask portion).

The optical film as formed on the glass substrate having the rubbing-treated polyimide film was set between the liquid crystal cell of an STN display and a polarizing plate. As a result, different color were displayed in the irradiated and unirradiated portions respectively.

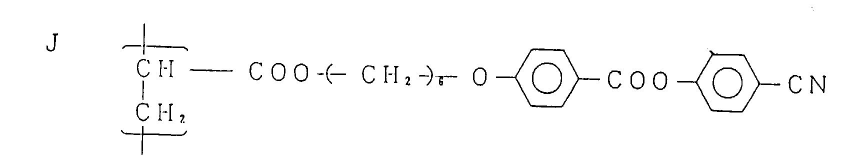

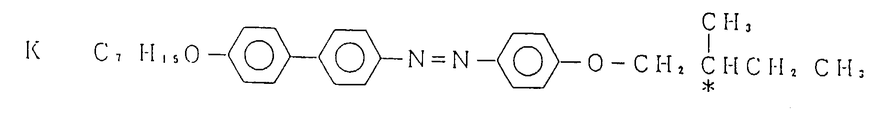

### Comparative Example 4

The procedure of Example 5 was repeated except that the radiation of light was not performed. The resulting optical film was found to have a An.d of 890 nm and a twist angle of -72°, which was common to the whole surface of the film.

When this optical film was set between the liquid crystal cell of the STN and the polarizing plate in the same manner as in Example 5, there was obtained only a single display color throughout the whole film surface, thus proving that the film did not satisfy the desired optical performance.

### Example 6

There was prepared a 15 wt% solution of a photoreactive, liquid crystalline polymer composition in phenol/tetrachloroethane (60/40 weight ratio), the photoreactive liquid crystalline polymer composition containing a liquid crystalline high-molecular compound L (inherent viscosity: 0.18) and a photoreactive, liquid crystalline high-molecular compound M (inherent viscosity: 0.17) at a weight ratio of 98:2. Then, using a spin coater, the solution was applied onto a polyether ether ketone (PEEK) film substrate of 15 cm by 15 cm which had been subjected directly to a rubbing treatment, and was then dried to give a liquid crystalline polymer film.

Subsequently, with a high-pressure mercury vapor lamp, ultraviolet light was applied 10 J/cm² to the film through a gradation photomask having a mosaic pattern of 1 mm long by 1 mm wide and having three stages of varying light transmittances, followed by heat treatment at 210°C for 10 minutes and subsequent cooling to fix the orientation formed.

Onto this optical film was then bonded a 50 µm thick polycarbonate film (PC) film substrate as a second substrate having the same size as that of the optical film, using an epoxy resin adhesive. Next, the PEEK film used as an orienting film was stripped slowly, allowing the optical film to be transferred onto the PES film.

The optical film was found to have a Δn·d of 720 nm, a twist angle of -186°, -200° and -215° respectively in the three areas different in light transmittance.

The optical film as formed on the PES film was then held between polarizing plates and checked for the color of transmitted light. As a result, three different colors were observed in the mosaic pattern form. Thus, the optical film proved employable as an optical element having three different optical characteristics in a single plane.

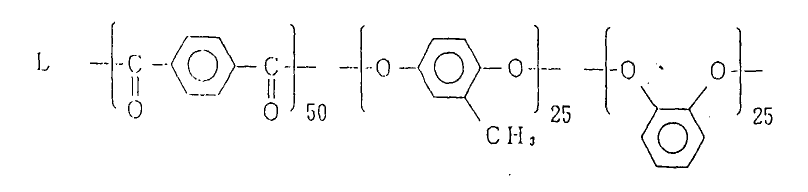

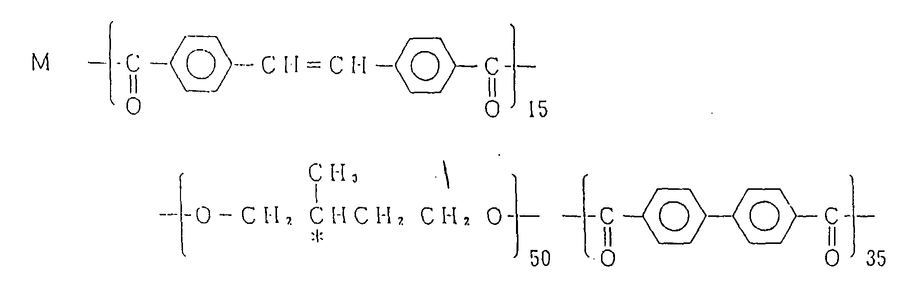

### Example 7

There was prepared a 13 wt% solution of a photoreactive, liquid crystalline polymer composition in phenol/tetrachloroethane (60/40 weight ratio), the photoreactive liquid crystalline polymer composition containing a liquid crystalline high-molecular compound N (inherent viscosity: 0.19) and a photoreactive, liquid crystalline high-molecular compound O (inherent viscosity: 0.16) at a weight ratio of 90:10. Then, using a screen printer, the solution was applied onto a 1 mm thick glass substrate having a size of 15 cm by 23 cm and polyimide layer which had been subjected to a rubbing treatment and was then dried to give a film of the photoreactive, liquid crystalline polymer composition.

Then, with a high-pressure mercury vapor lamp, ultraviolet light was applied 5 J/cm² to the film through a gradation photomask having a mosaic pattern of 1 mm long by 1 mm wide and having three stages of varying light transmittances, followed by heat treatment at 210°C for 10 minutes and subsequent cooling to fix the orientation formed.

This optical film was found to have a An.d of 500 nm, a twist angle of -242°, -263° and -280° respectively in the three areas different in light transmittance.

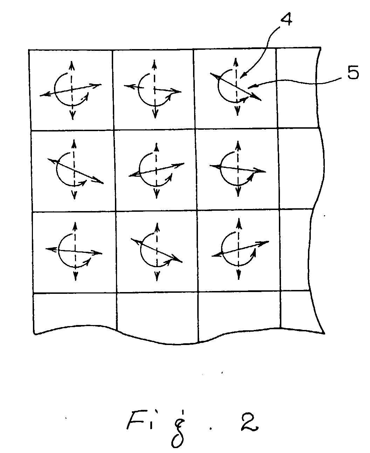

The optical film as formed on the glass substrate having the rubbing-treated polyimide layer was then held between polarizing plates and checked for the color of transmitted light. As a result, three different colors were observed in the mosaic pattern form, and thus the film proved employable as an optical element having three different optical characteristics in a single plane (as illustrated schematically in Fig. 2).

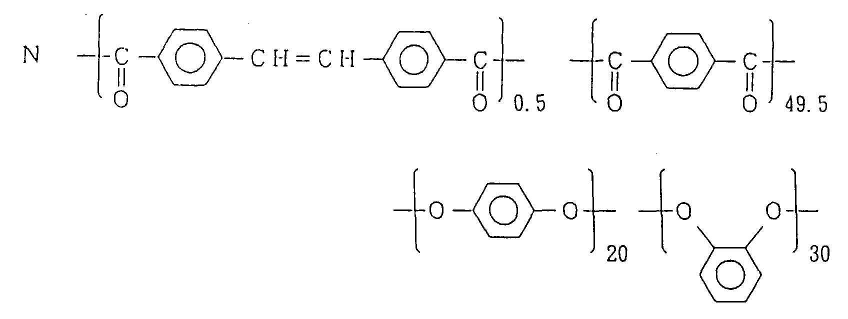

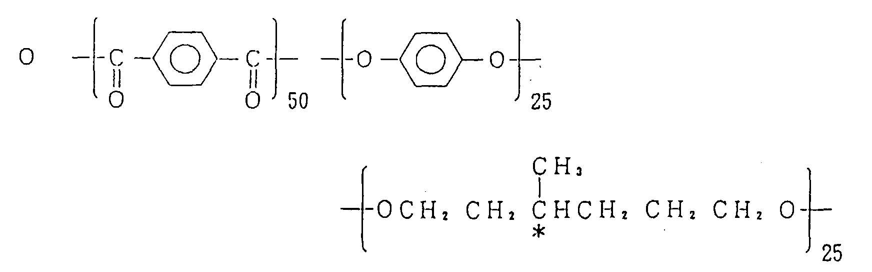

### Comparative Example 5

The procedure of Example 7 was repeated except that a liquid crystalline high-molecular compound P (inherent viscosity: 0.19) was used in place of the liquid crystalline high-molecular compound N. After the heat treatment, cooling was made to try to fix orientation, but the resulting optical film was whitely turbid, free of transparency.

The optical film was then held between polarizing plates and observed to find that the orientation was mostly disordered to an employable extent of the film as an optical element. A check of phase series of the liquid crystalline polymer showed that the polymer did not have glass phase, but had crystal phase, in the lower temperature portion than the liquid crystal phase.

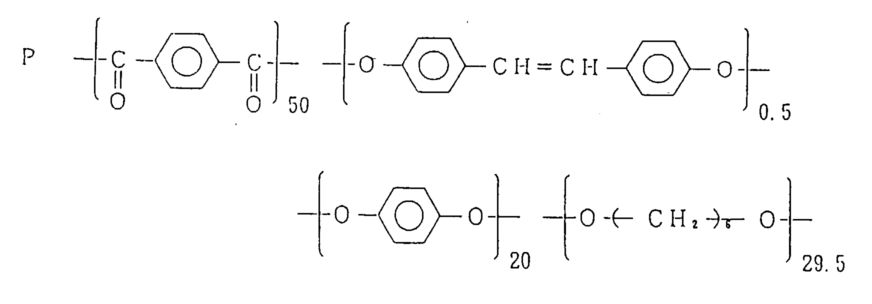

### Example 8

The procedure of Example 4 was repeated, provided a photoreactive, liquid crystalline high-molecular compound Q (inherent viscosity: 0.17) was used and the dose of ultraviolet light was changed to 4 J/cm², to give an optical film.

The optical film was found to have a Δn·d of 250 nm, a twist angle of -55° in the irradiated portion and a twist angle of -70° in the unirradiated portion. (mask portion).

Next, in the same manner as in Example 4, the optical film was held between polarizing plates and checked for the color of transmitted light. As a result, different colors were observed in the stripe pattern form, thus proving that the film was fully employable as a microoptical element.

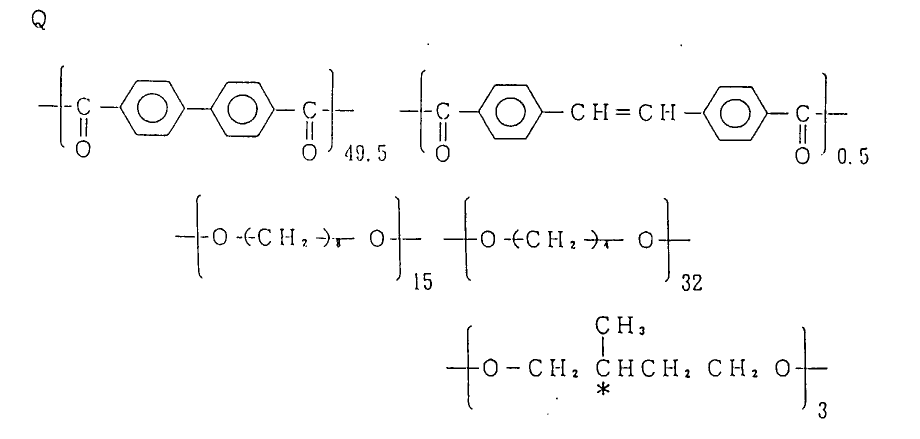

### Example 9

There was prepared a 17 wt% solution of a polymer R (inherent viscosity: 0.16) in phenol/tetrachloroethane (60/40 weight ratio). Then, using a spin coater, the solution was applied onto a 1 mm thick glass plate of 15 cm by 23 cm having a polyimide layer which had been subjected to a rubbing tretment, and was then dried to give a liquid crystalline polymer film.

Thereafter, using a high-pressure mercury vapor lamp, ultraviolet light was applied 20 J/cm² to the film through a photomask having a mosaic pattern of 1 cm long by 1 cm wide, followed by heat treatment at 230°C for 20 minutes and subsequent cooling to fix the orientation formed. The thickness of the optical film on the glass substrate was 3 µm. Using a spectrophotometer (Hitachi Recording Spectrophotometer 330), selective reflction wavelengths of the optical film were checked and found to be 560 nm, in the irradiated portion and 450 nm in the unirradiated portion (mask portion). Also observed were a twist angle of 3,200° in the irradiated portion and 4,000° in the unirradiated portion (mask portion). When this optical film was observed under white light, reflected rays of different colors were observed in the mosaic pattern form, thus proving that the film was fully employable as a microoptical element.

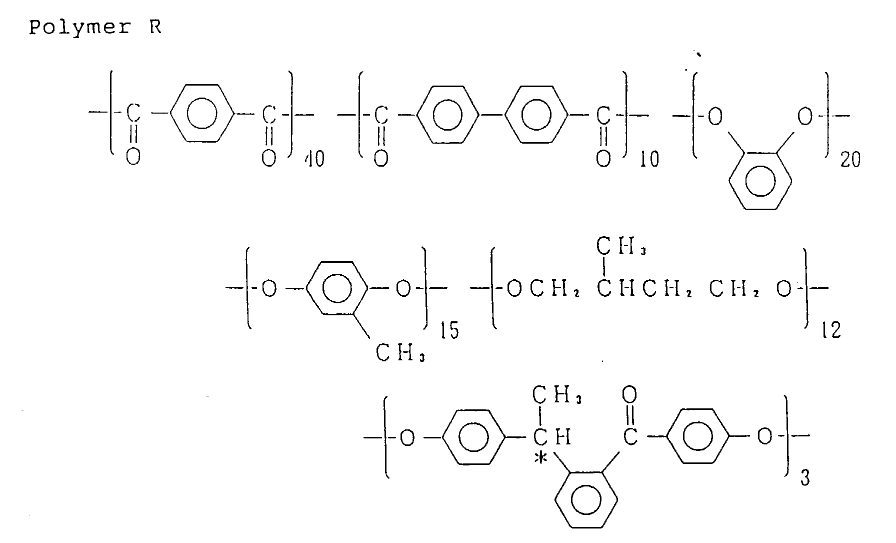

### [Effect of the Invention]

According to the present invention it is possible to prepare easily and with a high accuracy an optical film which is employable as a microoptical element having a plurality of different optical characteristics in a single plane and which is applicable to a wide variety of uses including a field angle improving plate for a liquid crystal display, a color filter, a color reflective plate, a microoptical rotator, and a 3D display.

### [Brief Description of the Drawings]

Fig. 1 is a schematic diagram of a microoptical rotator obtained in Example 3; and
Fig. 1 is a schematic diagram of an optical element obtained in Example 7.

### [Explanation of Reference Numerals]

- 1 ...: PC film (a second substrate)
- 2 ...: adhesive
- 3 ...: liquid crystalline polymer
- 4 ...: orientation direction of liquid crystalline polymer molecules on the orienting substrate side
- 5 ...: orientation direction of liquid crystalline polymer molecules at the surface opposite to the orienting substrate side

### Fig. 1

(a) Plan View
   Illustrates an orientation direction of the liquid crystalline polymer molecules on the orienting substrate side (the side opposite to the second substrate).
(b) Sectional View
(c) Plan View
   Illustrates an orientation direction of the liquid crystalline polymer molecules on the second substrate side.

## Claims

1. A method for preparing an optical film, comprising forming on an orienting substrate a film of a liquid crystalline polymer which assumes a glassy state at a temperature below the liquid crystal transition point thereof, allowing said liquid crystalline polymer to be oriented in the state of liquid crystal, and thereafter fixing the orientation form obtained, characterized in that said liquid crystalline polymer has a property of undergoing a change in its orientation form upon exposure to light and that during the period after formation of a film of the liquid crystalline polymer on the orienting substrate until fixing of the orientation form, at least a portion of the liquid crystalline polymer film formed on the orienting substrate is subjected to the radiation of light to control the orientation form.

2. A method as set forth in Claim 1, wherein at least a portion of the liquid crystalline polymer film formed on the orienting substrate is subjected to the radiation of light, controlling the orientation form in the irradiated portion into an orientation form different from that before the irradiation in the state of liquid crystal, either simultaneously or after the irradiation, and thereafter fixing the orientation form.

3. A method as set forth in Claim 1 or Claim 2, wherein said liquid crystalline polymer possesses a property of forming an orientation form having a twisted structure in the state of liquid crystal.

4. A method as set forth in any of Claims 1 to 3, wherein the control of the orientation form is made by a change in twisted angle of the liquid crystalline polymer which occurs upon exposure to light.
